# EUROPEAN PATENT APPLICATION

(11) **EP 4 734 045 A1**
(43) Date of publication of application: **29.04.2026**
(21) Application number: 24830152.5
(22) Date of filing: 06.05.2024
(51) Int. Cl.: G06T 5/50, H04N 19/85

(54) **IMAGE FILTERING METHOD AND APPARATUS BASED ON NEURAL NETWORK, ENCODING METHOD, DECODING METHOD, DEVICE, AND STORAGE MEDIUM**

(30) Priority: 26.06.2023 CN 202310760900
(71) Applicant: Tencent Technology (Shenzhen) Company Limited, Shenzhen, Guangdong 518057 (CN)
(72) Inventor: CHANG, Renjie, Shenzhen, Guangdong 518057 (CN); WANG, Liqiang, Shenzhen, Guangdong 518057 (CN)
(74) Representative: Nederlandsch Octrooibureau
(86) International application number: PCT/CN2024/091274
(87) International publication number: WO 2025/001504

(57) **Abstract**

This application provides neural network-based picture filtering, encoding, and decoding methods and apparatuses, a device, and a storage medium. The method may be applied to fields such as picture processing, video encoding and decoding, and video live streaming, and includes: determining input information of a neural network loop filter (NNLF) based on a to-be-filtered picture, the input information including the to-be-filtered picture; and filtering the input information through the NNLF to obtain a filtered picture of the to-be-filtered picture, wherein the NNLF includes a plurality of convolution layers configured to extract picture feature information, and the plurality of convolution layers are obtained by processing a standard convolution layer in at least two of a multi-level receptive field (MLRF) mode, a tensor decomposition mode, and a group convolution (GC) mode. Thus, the filtering operation complexity of the NNLF is reduced without reducing the filtering performance of the NNLF, thereby improving the picture filtering effect.

## Description

### CROSS-REFERENCE TO RELATED APPLICATION

This application claims priority to Chinese Patent Application No. 202310760900.5, entitled "IMAGE FILTERING METHOD AND APPARATUS BASED ON NEURAL NETWORK, ENCODING METHOD, DECODING METHOD, DEVICE, AND STORAGE MEDIUM" filed with the China National Intellectual Property Administration on June 26, 2023, which is incorporated herein by reference in its entirety.

### FIELD OF THE TECHNOLOGY

Embodiments of this application relate to the technical field of picture processing, and in particular, to neural network-based picture filtering, encoding, and decoding methods and apparatuses, a device, and a storage medium.

### BACKGROUND OF THE DISCLOSURE

With the development of video technologies, a large amount of data is included in video data. To facilitate transmission of the video data, a video apparatus performs a video compression technology to more efficiently transmit or store the video data. During the video compression, an encoder side and a decoder side each need to perform operations such as inverse quantization and inverse transform to obtain a reconstructed picture. Since a loss is introduced to the video compression, the reconstructed picture is filtered to reduce a compression loss of the picture.

With the rapid development of neural network technologies, neural network loop filters (NNLFs) are widely applied to video processing. However, a current NNLF cannot have a balance between filtering performance and filtering complexity, causing a poor picture filtering effect.

### SUMMARY

This application provides neural network-based picture filtering, encoding, and decoding methods and apparatuses, a device, and a storage medium. Thus, the filtering operation complexity is reduced while ensuring the picture filtering performance, thereby improving a filtering effect.

According to a first aspect, this application provides a neural network-based picture filtering method, which is performed by a filtering device and includes:
determining input information of an NNLF based on a to-be-filtered picture, the input information including the to-be-filtered picture; and
filtering the input information through the NNLF to obtain a filtered picture of the to-be-filtered picture, wherein the NNLF includes a plurality of convolution layers configured to extract picture feature information; and the plurality of convolution layers are obtained by processing a standard convolution layer in at least two of a multi-level receptive field (MLRF) mode, a tensor decomposition mode, and a group convolution (GC) mode.

According to a second aspect, this application provides a picture decoding method, which is performed by a decoding device and includes:
decoding a bitstream, determining a reconstructed picture of a current picture, and determining input information of an NNLF based on the reconstructed picture, the input information including the reconstructed picture; and
filtering the input information through the NNLF to obtain a filtered picture of the reconstructed picture, wherein the NNLF includes a plurality of convolution layers configured to extract picture feature information; and the plurality of convolution layers are obtained by processing a standard convolution layer in at least two of an MLRF mode, a tensor decomposition mode, and a GC mode.

According to a third aspect, this application provides a picture encoding method, which is performed by an encoding device and includes:
encoding a current picture, determining a reconstructed picture of the current picture, and determining input information of an NNLF based on the reconstructed picture, the input information including the reconstructed picture; and
filtering the input information through the NNLF to obtain a filtered picture of the reconstructed picture, wherein the NNLF includes a plurality of convolution layers configured to extract picture feature information; and the plurality of convolution layers are obtained by processing a standard convolution layer in at least two of an MLRF mode, a tensor decomposition mode, and a GC mode.

According to a fourth aspect, this application provides a neural network-based picture filtering apparatus, which is applied to a filtering device and includes:
a determining unit configured to determine input information of an NNLF based on a to-be-filtered picture, the input information including the to-be-filtered picture; and
a filtering unit configured to filter the input information through the NNLF to obtain a filtered picture of the to-be-filtered picture, wherein the NNLF includes a plurality of convolution layers configured to extract picture feature information; and the plurality of convolution layers are obtained by processing a standard convolution layer in at least two of an MLRF mode, a tensor decomposition mode, and a GC mode.

According to a fifth aspect, this application provides a picture decoding apparatus, which is applied to a decoding device and includes:
a decoding unit configured to decode a bitstream, determine a reconstructed picture of a current picture, and determine input information of an NNLF based on the reconstructed picture, the input information including the reconstructed picture; and
a filtering unit configured to filter the input information through the NNLF to obtain a filtered picture of the reconstructed picture, wherein the NNLF includes a plurality of convolution layers configured to extract picture feature information; and the plurality of convolution layers are obtained by processing a standard convolution layer in at least two of an MLRF mode, a tensor decomposition mode, and a GC mode.

According to a sixth aspect, this application provides a picture encoding apparatus, which is applied to an encoding device and includes:
an encoding unit configured to encode a current picture, determine a reconstructed picture of the current picture, and determine input information of an NNLF based on the reconstructed picture, the input information including the reconstructed picture; and
a filtering unit configured to filter the input information through the NNLF to obtain a filtered picture of the reconstructed picture, wherein the NNLF includes a plurality of convolution layers configured to extract picture feature information; and the plurality of convolution layers are obtained by processing a standard convolution layer in at least two of an MLRF mode, a tensor decomposition mode, and a GC mode.

According to a seventh aspect, a decoder is provided, including a processor and a memory. The memory is configured to store a computer program, and the processor is configured to invoke and run the computer program stored in the memory to perform the method in the foregoing second aspect or implementations thereof.

According to an eighth aspect, an encoder is provided, including a processor and a memory. The memory is configured to store a computer program, and the processor is configured to invoke and run the computer program stored in the memory to perform the method in the foregoing third aspect or implementations thereof.

According to a ninth aspect, a chip is provided, configured to implement the method in any one of the first aspect to the third aspect or implementations thereof. Specifically, the chip includes: a processor configured to invoke and run a computer program from a memory to cause a device on which the chip is installed to perform the method in any one of the first aspect to the third aspect or implementations thereof.

According to a tenth aspect, a computer-readable storage medium is provided, configured to store a computer program, which when executed by a computer, causes the computer to perform the method in any one of the first aspect to the third aspect or implementations thereof.

According to an eleventh aspect, a computer program product is provided, including computer program instructions for causing a computer to perform the method in any one of the first aspect to the third aspect or implementations thereof.

According to a twelfth aspect, a computer program is provided, and the computer program, when run on a computer, causes the computer to perform the method in any one of the first aspect to the third aspect or implementations thereof.

In summary, this application provides a new NNLF. The NNLF includes the plurality of convolution layers configured to extract the picture feature information, and the plurality of convolution layers are obtained by processing the standard convolution layer in at least two of the MLRF mode, the tensor decomposition mode, and the GC mode. That is, in this application, in at least two of the MLRF mode, the tensor decomposition mode, and the GC mode, an existing standardized convolution operation is decomposed into a convolution operation with low operation complexity. Thus, the filtering operation complexity of the NNLF is reduced without reducing the filtering performance of the NNLF, thereby improving the picture filtering effect.

### BRIEF DESCRIPTION OF THE DRAWINGS

FIG. 1 is a schematic block diagram of a video encoding and decoding system according to an embodiment of this application.
FIG. 2 is a schematic diagram of an encoding framework according to an embodiment of this application.
FIG. 3 is a schematic diagram of a decoding framework according to an embodiment of this application.
FIG. 4 is a schematic diagram of a CU.
FIG. 5 is a schematic diagram of a filtering process of an NNLF.
FIG. 6 is a schematic diagram of a single-branch NNLF.
FIG. 7A to FIG. 7C are schematic diagrams of an existing residual block (RB).
FIG. 8 is a schematic diagram of a dual-branch NNLF.
FIG. 9 is a schematic flowchart of a neural network-based picture filtering method according to an embodiment of this application.
FIG. 10 is a schematic diagram of canonical polyadic decomposition (CPD).
FIG. 11A to FIG. 12B are schematic diagrams of a network after a convolution layer at a head or a tail of an NNLF is processed.
FIG. 13 is a schematic diagram of an NNLF according to an embodiment of this application.
FIG. 14 is a schematic diagram of another NNLF according to an embodiment of this application.
FIG. 15A to FIG. 15E are schematic diagrams of some network structures of an i^{th} RB.
FIG. 16A to FIG. 19D are schematic diagrams of some network structures of an i^{th} RB.
FIG. 20 is a schematic structural diagram of an i^{th} RB.
FIG. 21 to FIG. 21D are schematic diagrams of some network structures of an i^{th} RB.
FIG. 22A to FIG. 23C are schematic diagrams of some network structures of an NNLF.
FIG. 24 is a schematic flowchart of a picture decoding method according to an embodiment of this application.
FIG. 25 is a schematic flowchart of a picture filtering method according to an embodiment of this application.
FIG. 26 is a schematic block diagram of a neural network-based picture filtering apparatus according to an embodiment of this application.
FIG. 27 is a schematic block diagram of a picture decoding apparatus according to an embodiment of this application.
FIG. 28 is a schematic block diagram of a picture encoding apparatus according to an embodiment of this application.
FIG. 29 is a schematic block diagram of an electronic device according to an embodiment of this application.

### DESCRIPTION OF EMBODIMENTS

The technical solutions in embodiments of this application are clearly and completely described in the following with reference to the accompanying drawings in the embodiments of this application. Apparently, the described embodiments are merely some rather than all of the embodiments of this application. Based on the embodiments of this application, all other embodiments obtained by a person skilled in the art without inventive effort fall within the scope of this application.

The terms "first", "second", and the like in the specification and claims of this application and the foregoing drawings are used for distinguishing similar objects and are not necessarily used for describing a particular order or sequence. The data so used may be interchangeable where appropriate so that the embodiments of this application described herein can be implemented in an order other than those illustrated or described herein. In the embodiments of the present disclosure, "B corresponding to A" represents that B is associated with A. In an implementation, B may be determined according to A. However, determining B according to A does not mean determining B according to A alone, but also according to A and/or other information. Moreover, the terms "include", "have", and any other variants mean to cover the non-exclusive inclusion, for example, a process, method, system, product, or server that includes a list of steps or units is not necessarily limited to those expressly listed steps or units, but may include other steps or units not expressly listed or inherent to such a process, method, product, or device. In the description of this application, unless otherwise stated, "a plurality of" refers to two or more than two.

This application may be applied to the field of picture encoding and decoding, the field of video encoding and decoding, the field of hardware video encoding and decoding, the field of dedicated circuit video encoding and decoding, the field of real-time video encoding and decoding, and the like. For example, the solutions of this application may be incorporated into a deep learning-based end-to-end picture coding standard, such as JPEG AI. Alternatively, the solutions of this application may be operated by combining with other proprietary or industry standards, which contain ITU-TH.261, ISO/IECMPEG-1Visual, ITU-TH.262 or ISO/IECMPEG-2Visual, ITU-TH.263, ISO/IECMPEG-4Visual, ITU-TH.264 (alternatively referred to as ISO/IECMPEG-4AVC), and scalable video coding (SVC) and multiview video coding (MVC) extensions. The technology of this application is not limited to any particular encoding and decoding standard or technology.

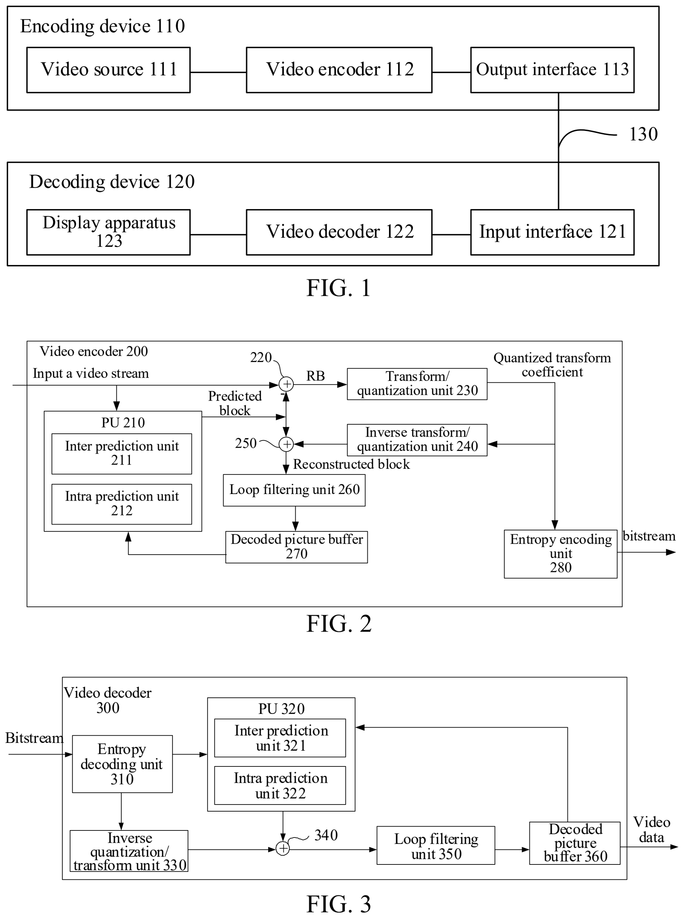

For ease of understanding, a video encoding and decoding system according to an embodiment of this application will first be described with reference to FIG. 1.

FIG. 1 is a schematic block diagram of a video encoding and decoding system according to an embodiment of this application. FIG. 1 is merely an example, and the video encoding and decoding system according to this embodiment of this application includes but is not limited to that shown in FIG. 1. As shown in FIG. 1, a video encoding and decoding system 100 contains an encoding device 110 and a decoding device 120. The encoding device is configured to encode (which may be understood as compressing) video data to generate a bitstream, and transmit the bitstream to the decoding device. The decoding device decodes the bitstream generated by the encoding device to obtain decoded video data.

In this embodiment of this application, the encoding device 110 may be understood as a device having a video encoding function, and the decoding device 120 may be understood as a device having a video decoding function. That is, in this embodiment of this application, the encoding device 110 and the decoding device 120 include a wider range of apparatuses, such as a smartphone, a desktop computer, a mobile computing apparatus, a notebook computer (for example, a laptop), a tablet computer, a set-top box, a television, a camera, a display apparatus, a digital media player, a video game console, and an in-vehicle computer.

In some embodiments, the encoding device 110 may transmit encoded video data (for example, the bitstream) to the decoding device 120 through a channel 130. The channel 130 may include one or more media and/or apparatuses capable of transmitting the encoded video data from the encoding device 110 to the decoding device 120.

In one example, the channel 130 includes one or more communication media enabling the encoding device 110 to directly transmit the encoded video data to the decoding device 120 in real time. In this example, the encoding device 110 may modulate the encoded video data according to a communication standard and transmit modulated video data to the decoding device 120. The communication medium contains a wireless communication medium, such as a radio frequency spectrum. In some embodiments, the communication medium may further contain a wired communication medium, such as one or more physical transmission lines.

In another example, the channel 130 includes a storage medium, and the storage medium may store video data encoded by the encoding device 110. The storage medium contains multiple local access data storage media, such as an optical disc, a digital video disc (DVD), and a flash memory. In this example, the decoding device 120 may acquire the encoded video data from the storage medium.

In another example, the channel 130 may contain a storage server, and the storage server may store the video data encoded by the encoding device 110. In this example, the decoding device 120 may download the stored encoded video data from the storage server. In some embodiments, the storage server may store the encoded video data and transmit the encoded video data to the decoding device 120, such as a web server (for example, for a website) and a file transfer protocol (FTP) server.

In some embodiments, the encoding device 110 contains a video encoder 112 and an output interface 113. The output interface 113 may contain a modulator/demodulator (modem) and/or a transmitter.

In some embodiments, besides the video encoder 112 and the output interface 113, the encoding device 110 may further include a video source 111.

The video source 111 may contain at least one of a video acquisition apparatus (for example, a video camera), a video archive, a video input interface, and a computer graphics system. The video input interface is configured to receive video data from a video content provider, and the computer graphics system is configured to generate video data.

The video encoder 112 encodes video data from the video source 111 to generate a bitstream. The video data may include one or more pictures or sequences of pictures. The bitstream includes encoded information of the picture or the sequence of pictures in a form of a bitstream. The encoded information may contain encoded picture data and associated data. The associated data may contain a sequence parameter set (SPS), a picture parameter set (PPS), and other syntax structures. The SPS may contain parameters applied to one or more sequences. The PPS may contain parameters applied to one or more pictures. The syntax structure refers to a set of zero or a plurality of syntax elements arranged in a specified order in the bitstream.

The video encoder 112 directly transmits the encoded video data to the decoding device 120 via the output interface 113. The encoded video data may further be stored on a storage medium or a storage server for subsequent reading by the decoding device 120.

In some embodiments, the decoding device 120 contains an input interface 121 and a video decoder 122.

In some embodiments, besides the input interface 121 and the video decoder 122, the decoding device 120 may further include a display apparatus 123.

The input interface 121 contains a receiver and/or a modem. The input interface 121 may receive the encoded video data through the channel 130.

The video decoder 122 is configured to decode the encoded video data to obtain decoded video data, and transmit the decoded video data to the display apparatus 123.

The display apparatus 123 displays the decoded video data. The display apparatus 123 may be integrated with the decoding device 120 or external to the decoding device 120. The display apparatus 123 may include multiple display apparatuses, such as a liquid crystal display (LCD), a plasma display, an organic light emitting diode (OLED) display, or another type of display apparatus.

In addition, FIG. 1 is merely an example, and the technical solutions of the embodiments of this application is not limited to FIG. 1. For example, the technology of this application may further be applied to single-side video encoding or single-side video decoding.

A video encoding framework involved in the embodiments of this application are described below.

FIG. 2 is a schematic block diagram of a video encoder according to an embodiment of this application. The video encoder 200 may be configured to perform lossy compression on a picture, or may be configured to perform lossless compression on a picture. The lossless compression may be visually lossless compression, or may be mathematically lossless compression.

The video encoder 200 may be applied to picture data in a luminance and chrominance (YCbCr, YUV) format. For example, a YUV ratio may be 4: 2: 0, 4: 2: 2, or 4: 4: 4, where Y represents the luminance (Luma), Cb (U) represents blue chrominance, Cr (V) represents red chrominance, and U and V represent chroma for describing colors and saturation. For example, in a color format, 4: 2: 0 represents that every four pixels have four luminance components and two chrominance components (YYYYCbCr), 4: 2: 2 represents that every four pixels have four luminance components and four chrominance components (YYYYCbCrCbCr), and 4: 4: 4 represents full pixel display (YYYYCbCrCbCrCbCrCbCr).

For example, the video encoder 200 reads video data, and for each frame of picture in the video data, divides the frame of picture into several coding tree units (CTUs). In some examples, the CTU may be referred to as a "tree block", a "largest coding unit (LCU)", or a "coding tree block (CTB)". Each CTU may be associated with pixel blocks having equal sizes in the picture. Each pixel may correspond to one luminance (or luma) sample and two chrominance (or chroma) samples. Therefore, each CTU may be associated with one luminance sampling block and two chrominance sampling blocks. A size of one CTU is, for example, 128×128, 64×64, and 32×32. One CTU may further be divided into several CUs for encoding. The CU may be a rectangular block or a square block. The CU may further be divided into a prediction unit (PU) and a transform unit (TU) so that encoding, prediction, and transform separation are more flexible when processing. In an example, the CTU is divided into CUs in a quadtree mode, and the CU is divided into the TU and the PU in a quadtree mode.

The video encoder and the video decoder may support various PU sizes. Assuming that a size of a particular CU is 2N×2N, the video encoder and the video decoder may support a PU of 2N×2N or N×N for intra prediction, and support a symmetric PU of 2N×2N, 2N×N, N×2N, N×N, or a similar size for inter prediction. The video encoder and the video decoder may further support asymmetric PUs of 2N×nU, 2N×nD, nL×2N, and nR×2N for inter prediction.

In some embodiments, as shown in FIG. 2, the video encoder 200 may include: a PU 210, a convolution unit 220, a transform/quantization unit 230, an inverse transform/quantization unit 240, a reconstruction unit 250, a loop filtering unit 260, a decoded picture buffer 270, and an entropy encoding unit 280. The video encoder 200 may contain more, fewer, or different functional components.

In some embodiments, in this application, the current block may be referred to as a current CU, a current PU, or the like. A predicted block may alternatively be referred to as a predicted picture block or a picture prediction block, and a reconstructed picture block may alternatively be referred to as a reconstructed block or a picture reconstructed block.

In some embodiments, the PU 210 includes an inter prediction unit 211 and an intra prediction unit 212. Due to a strong correlation between adjacent pixels in a frame of a video, in a video encoding and decoding technology, a space redundancy between adjacent pixels is eliminated using an intra prediction method. Due to a strong similarity between adjacent frames in a video, in the video encoding and decoding technology, a temporal redundancy between adjacent frames is eliminated using an inter prediction method, thereby improving the coding efficiency.

The inter prediction unit 211 may be configured for inter prediction. The inter prediction may include motion estimation and motion compensation. The motion estimation may search a reference image in a reference image list to find a reference block of a to-be-encoded picture block. The motion estimation may generate an index indicating the reference block and a motion vector indicating a spatial displacement between the to-be-encoded picture block and the reference block. The motion estimation may output the index of the reference block and the motion vector as motion information of the to-be-encoded picture block. The motion compensation may obtain prediction information of the to-be-encoded picture block based on the motion information of the to-be-encoded picture block. The inter prediction may refer to picture information of different frames. For the inter prediction, the reference block is found from a reference frame using the motion information, and a predicted block is generated according to the reference block to eliminate the temporal redundancy. A frame used in the inter prediction may be a P frame and/or a B frame. The P frame refers to a forward predicted frame, and the B frame refers to a bidirectional predicted frame. For the inter prediction, the reference block is found from the reference frame using the motion information, and a predicted block is generated according to the reference block. The motion information includes a reference frame list in which the reference frame is located, a reference frame index, and a motion vector. The motion vector may be either integer-pixel or fractional-pixel. If the motion vector is fractional-pixel, a needed fractional-pixel block needs to be made in the reference frame using interpolation filtering. The integer-pixel or fractional-pixel block in the reference frame found according to the motion vector is referred to as the reference block herein. In some technologies, the reference block is directly used as the predicted block. In some technologies, the predicted block is generated through reprocessing based on the reference block. Generating the predicted block through reprocessing based on the reference block may alternatively be understood as using the reference block as a predicted block and then processing based on the predicted block to generate a new predicted block.

The intra prediction unit 212 only refers to information of the same frame of picture to predict pixel information in a current encoded picture block for eliminating the space redundancy. A frame used for the intra prediction may be an I frame.

The intra prediction has multiple prediction modes. Taking an international digital video coding standard H series as an example, the H.264/AVC standard has eight angular prediction modes and one non-angular prediction mode, and the H.265/HEVC extends to 33 angular prediction modes and two non-angular prediction modes. Intra prediction modes used in the HEVC include a planar mode, a direct current (DC) mode, and 33 angular modes, for a total of 35 prediction modes. Intra modes used in the VVC include a planar mode, a DC mode, and 65 angular modes, for a total of 67 prediction modes.

With the increase of angular modes, the intra prediction is more accurate and better conforms to requirements for the development of high-definition and ultra-high-definition digital videos.

The convolution unit 220 may generate an RB of the CU based on the pixel block of the CU and a predicted block of a PU of the CU. For example, the convolution unit 220 may generate the RB of the CU so that each sample in the RB has a value equal to a difference between a sample in the pixel block of the CU and a corresponding sample in the predicted block of the PU of the CU.

The transform/quantization unit 230 may quantize a transform coefficient. The transform/quantization unit 230 may quantize, based on a quantization parameter (QP) value associated with the CU, a transform coefficient associated with a TU of the CU. The video encoder 200 may adjust a quantization degree applied to a transform coefficient associated with the CU by adjusting the QP value associated with the CU. Illustratively, a residual video signal is converted into a transform domain through transform operations such as discrete Fourier transform (DFT) and discrete cosine transform (DCT). This is referred to as a transform coefficient. A lossy quantization operation is further performed on a signal in the transform domain, and some information is lost so that the quantized signal is conducive to compressed expression. In some video coding standards, more than one transform modes may be selected. Therefore, an encoder side needs to select one of the transform modes for the current CU and inform a decoder side. Fineness of the quantization is generally determined by a QP. A larger value of the QP indicates that coefficients in a larger value range are to be quantized into the same output, which may generally bring greater distortion and a lower bit rate. On the contrary, a smaller value of the QP indicates that coefficients in a smaller value range are to be quantized into the same output, which may generally bring less distortion and correspond to a higher bit rate.

The inverse transform/quantization unit 240 may apply inverse quantization and inverse transform to the quantized transform coefficient to reconstruct an RB from the quantized transform coefficient.

The reconstruction unit 250 may add samples of the reconstructed RB to corresponding samples of one or more predicted blocks generated by the PU 210 to generate a reconstructed picture block associated with the TU. In this mode, a sampling block of each TU of the CU is reestablished, and the video encoder 200 may reconstruct a pixel block of the CU.

The loop filtering unit 260 is configured to process pixels obtained after inverse transform and inverse quantization to compensate for distortion information and provide a better reference for subsequent pixels encoding. For example, a deblocking filtering operation may be performed to reduce blocking effects of pixel blocks associated with the CU. It can be learned from the foregoing description that after operations of inverse quantization, inverse transform, and prediction compensation are performed on an encoded picture, a reconstructed decoded picture may be obtained. The reconstructed picture has some information different from that in an original picture as a result of quantization, resulting in distortion. Performing filtering operations on the reconstructed picture, such as a deblocking filter (DBF), a sample adaptive offset (SAO), or an adaptive loop filter (ALF), may effectively reduce the distortion caused by quantization. Since these filtered reconstructed pictures are used as references for subsequent pictures encoding to predict future signals, the foregoing filtering operation is alternatively referred to as loop filtering and a filtering operation in an encoding loop.

The decoded picture buffer 270 may store reconstructed pixel blocks. The inter prediction unit 211 may perform inter prediction on a PU of another picture using a reference picture containing the reconstructed pixel block. In addition, the intra prediction unit 212 may perform intra prediction on another PU in the same picture as the CU using the reconstructed pixel block in the decoded picture buffer 270.

The entropy encoding unit 280 may receive the quantized transform coefficient from the transform/quantization unit 230. The entropy encoding unit 280 may perform one or more entropy encoding operations on the quantized transform coefficient to generate entropy-encoded data. Illustratively, statistical compression encoding is performed on quantized transform domain signals according to frequencies of occurrence of values, and finally, a binarized (0 or 1) compressed bitstream is outputted. In addition, entropy encoding also needs to be performed on other information generated through encoding, such as a selected mode and a motion vector, to reduce a bit rate. In one example, statistical coding is a lossless coding mode and may effectively reduce a bit rate needed for expressing the same signal. Common statistical coding modes include variable length coding (VLC) or content adaptive binary arithmetic coding (CABAC).

FIG. 3 is a schematic block diagram of a video decoder according to an embodiment of this application.

As shown in FIG. 3, the video decoder 300 includes: an entropy decoding unit 310, a PU 320, an inverse quantization/transform unit 330, a reconstruction unit 340, a loop filtering unit 350, and a decoded picture buffer 360. The video decoder 300 may contain more, fewer, or different functional components.

The video decoder 300 may receive a bitstream. The entropy decoding unit 310 may parse the bitstream to extract syntax elements from the bitstream. As a part of parsing the bitstream, the entropy decoding unit 310 may parse an entropy-encoded syntax element in the bitstream. The PU 320, the inverse quantization/transform unit 330, the reconstruction unit 340, and the loop filtering unit 350 may decode the video data according to the syntax elements extracted from the bitstream, i.e., generating decoded video data.

In some embodiments, the PU 320 includes an intra prediction unit 322 and an inter prediction unit 321.

The intra prediction unit 322 may perform intra prediction to generate a predicted block of the PU. The intra prediction unit 322 may use an intra prediction mode to generate the predicted block of the PU based on a pixel block of a spatial adjacent PU. The intra prediction unit 322 may further determine the intra prediction mode of the PU according to one or more syntax elements parsed from the bitstream.

The inter prediction unit 321 may construct a first reference picture list (list 0) and a second reference picture list (list 1) according to the syntax element parsed from the bitstream. In addition, if the PU uses the inter prediction encoding, the entropy decoding unit 310 may parse motion information of the PU. The inter prediction unit 321 may determine one or more reference blocks of the PU according to the motion information of the PU. The inter prediction unit 321 may generate the predicted block of the PU according to one or more reference blocks of the PU.

The inverse quantization/transform unit 330 may perform inverse quantization (i.e., dequantization) on a transform coefficient associated with the TU. The inverse quantization/transform unit 330 may determine a quantization degree using a QP value associated with a CU of the TU.

After the inverse quantization is performed on the transform coefficient, the inverse quantization/transform unit 330 may apply one or more inverse transforms to an inverse-quantized transform coefficient to generate an RB associated with the TU.

The reconstruction unit 340 reconstructs a pixel block of the CU using the RB associated with the TU of the CU and the predicted block of the PU of the CU. For example, the reconstruction unit 340 may add a sample of the RB to a corresponding sample of the predicted block to reconstruct a pixel block of the CU, so as to obtain a reconstructed picture block.

The loop filtering unit 350 may perform a deblocking filtering operation to reduce blocking effects of pixel blocks associated with the CU.

The video decoder 300 may store the reconstructed picture of the CU in the decoded picture buffer 360. The video decoder 300 may use the reconstructed picture in the decoded picture buffer 360 as a reference picture for subsequent prediction, or input the reconstructed picture into a display device for presentation.

A basic procedure of video encoding and decoding is as follows. At the encoder side, a frame of picture is divided into blocks, and for a current block, the PU 210 generates a predicted block of the current block using intra prediction or inter prediction. The convolution unit 220 may calculate the RB based on the predicted block and an original block of the current block, i.e., a difference between the predicted block and the original block of the current block. The RB may alternatively be referred to as residual information. The RB is transformed and quantized through the transform/quantization unit 230 so that information insensitive to human eyes may be removed to eliminate visual redundancy. In some embodiments, the RB before being transformed and quantized through the transform/quantization unit 230 may be referred to as a time domain RB, and a time domain RB after being transformed and quantized through the transform/quantization unit 230 may be referred to as a frequency RB or a frequency domain RB. The entropy encoding unit 280 receives a quantized transform coefficient outputted by the transform/quantization unit 230, and may then perform entropy encoding on the quantized transform coefficient to output a bitstream. For example, the entropy encoding unit 280 may eliminate character redundancy according to a target context model and probability information of a binary bitstream.

At the decoder side, the entropy decoding unit 310 may parse the bitstream to obtain prediction information, a quantization coefficient matrix, and the like of the current block. The PU 320, based on the prediction information, generates the predicted block of the current block using intra prediction or inter prediction on the current block. The inverse quantization/transform unit 330 uses the quantization coefficient matrix obtained from the bitstream to perform inverse quantization and inverse transform on the quantization coefficient matrix to obtain the RB. The reconstruction unit 340 adds the predicted block and the RB to obtain a reconstructed block. The reconstructed blocks form the reconstructed picture, and the loop filtering unit 350 performs loop filtering on the reconstructed picture based on the picture or based on the blocks to obtain a decoded picture. The encoder side also needs an operation similar to that of the decoder side to obtain the decoded picture. The decoded picture may alternatively be referred to as a reconstructed picture, and the reconstructed picture may be a subsequent frame used as a reference frame for inter prediction.

Block division information determined by the encoder side, and mode information or parameter information such as prediction, transform, quantization, entropy encoding, and loop filtering are carried in the bitstream when necessary. The decoder side parses the bitstream and analyzes the bitstream according to existing information to determine block division information, and mode information or parameter information such as prediction, transform, quantization, entropy encoding, and loop filtering that are the same as those of the encoder side, thereby ensuring that the decoded picture obtained by the encoder side is the same as the decoded picture obtained by the decoder side.

The foregoing description is a basic procedure of a video codec in a block-based hybrid coding framework. With the development of technologies, some modules or operations of the framework or the procedure may be optimized. This application is applicable to the basic procedure of the video codec in the block-based hybrid coding framework, but is not limited to the framework and the procedure.

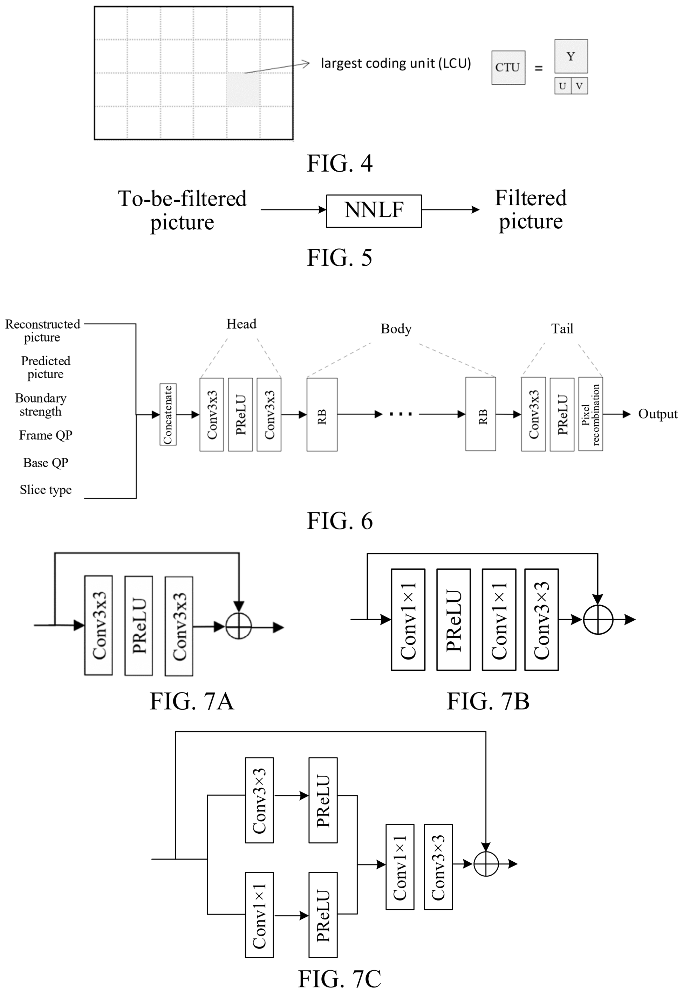

In an existing hybrid coding framework, each frame of picture in a video is usually first segmented into units of a particular size, and then a subsequent encoding and decoding procedure is performed. As shown in FIG. 4, the LCU is a basic CU in the hybrid coding framework and usually contains two parts: luminance Y and chrominance UV. Since the U component and the V component in the chrominance have similar characteristics, the U component and the V component are usually sequentially processed according to an order of U first and then V using the same encoding parameter, and encoding results of U and V are correspondingly obtained.

The existing hybrid coding framework uses a conventional loop filter to suppress the distortion of a reconstructed picture, thereby improving the quality of the reconstructed picture. In addition, this framework expects to restore an encoded reconstructed picture to an original picture. However, a conventional loop filter is based on manual design, which makes it difficult to effectively reduce the distortion of the reconstructed picture, leaving a relatively large optimization space. Since deep learning tools have excellent performance in picture processing, a deep learning-based loop filter is applied to a loop filter module.

A main technology involved in this application is an NNLF. As shown in FIG. 5, a to-be-filtered picture before the filtering is inputted into a trained filter to obtain an enhanced picture after the filtering.

In a training process, the neural network usually uses a loss function to constrain a filtered picture so that the picture is restored to the original picture as much as possible. The loss function measures a difference between a filtered value and a true value. A larger loss value indicates a larger difference, and a training target is to reduce the loss. For a deep learning-based coding tool, for example, a common loss function includes: an L1 norm loss function, an L2 norm loss function, and a smooth L1 loss function.

Currently, commonly used NNLFs include convolutional neural network (CNN) filters. Convolution is a type of feedforward neural network that contains convolution calculation and has a deep structure. It is one of the representative algorithms of deep learning. The CNN mainly includes a series of basic convolution layers or convolution modules built based on the convolution layers. FIG. 6 is a specific example of a network structure model. The network includes a head, a body, and a tail. The body includes at least one RB (ResBlock).

The ResBlock is a classic convolution module and used in various neural network models, and common structures thereof are shown in FIG. 7A to FIG. 7C.

A specific usage mode of the ResBlock is as follows.

Mode 1: An input is picture-level information: the input of the ResBlock may be one or more of picture information such as a reconstructed picture (rec) and a predicted picture (rec) and side information such as a boundary strength (BS), a frame QP (sliceQP), a base QP (baseQP), and a slice type (sliceType/IPB). an output is a feature-level picture with the number of channels being K (K is a positive integer, and when K = 1, the output is the picture-level information).

Mode 2: An input is feature-level information: the input of the ResBlock may be feature information with the number of channels being K that is extracted by a previous convolution layer/convolution block. In this case, an output of the ResBlock is feature-level information with the number of channels being M (K and M are both positive integers, and when M = 1, the output is the picture-level information).

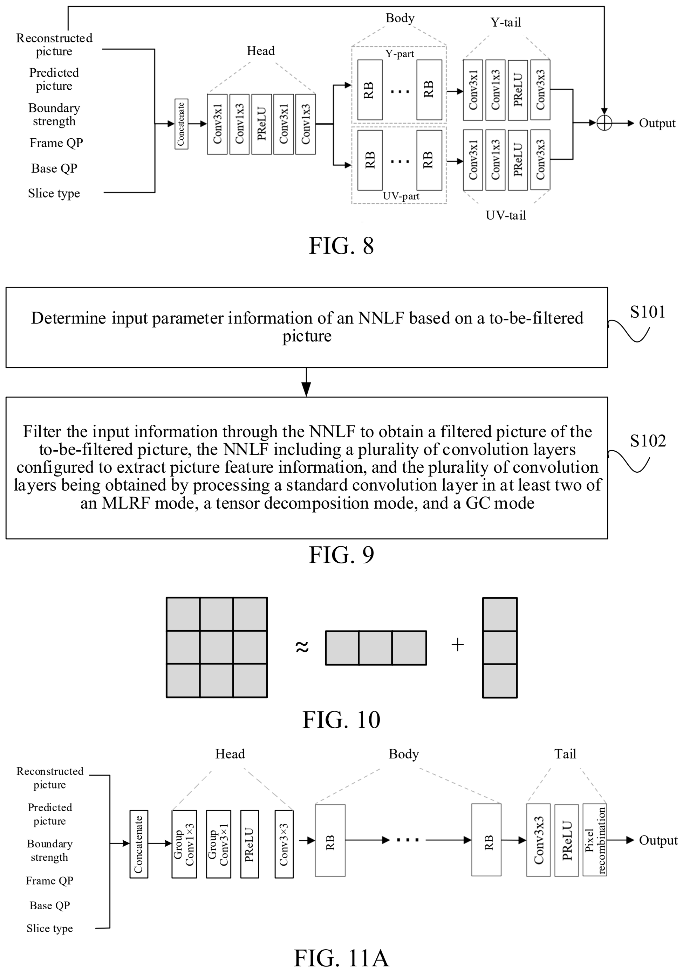

In addition, any convolution layer or convolution block in different neural network models may be replaced with the ResBlock. For example, in a network structure shown in FIG. 8 that is different from that in FIG. 6, the network separates the luminance component and the chrominance component, but the ResBlock may still be used in the structure.

As shown in FIG. 6 or FIG. 8, an existing NNLF usually builds an overall network structure based on common basic modules such as 3×3 convolution and RBs, to train the NNLF. For the network structure of the NNLF, repeatedly stacked 3×3 convolution and RBs can bring appreciable filtering performance, but excessively high operation complexity is introduced. Limiting the number of repetitions of the 3×3 convolution and RBs, i.e., constraining the operation complexity, makes it difficult to achieve relatively high filtering performance. Therefore, how to achieve relatively high picture filtering performance without introducing excessive operation complexity is an important research direction of the current neural network-based picture filtering technologies.

Based on this, to resolve the technical problem, the embodiments of this application provide a new NNLF. The NNLF includes a plurality of convolution layers configured to extract picture feature information, and the plurality of convolution layers are obtained by processing a standard convolution layer in at least two of an MLRF mode, a tensor decomposition mode, and a GC mode. For example, in the embodiments of this application, a standard convolution layer in the existing NNLF, for example, a standard convolution layer (for example, a 3×3 convolution layer) in the head, body, or tail of the NNLF shown in FIG. 6 or FIG. 8, is processed in at least two of the MLRF mode, the tensor decomposition mode, and the GC mode, and then converted into a convolution operation with low operation complexity. Thus, the filtering operation complexity of the NNLF is reduced without reducing the filtering performance of the NNLF, thereby improving the picture filtering effect.

The technical solutions of the embodiments of this application are described in detail in the following through some embodiments. The following several embodiments may be combined with each other, and same or similar concepts or processes may not be repeatedly described in some embodiments.

First, taking the decoder side as an example, a picture decoding method provided by an embodiment of this application is introduced.

FIG. 9 is a schematic flowchart of a neural network-based picture filtering method according to an embodiment of this application. This embodiment of this application is applied to the decoder or decoding device, and the encoder or encoding device shown in FIG. 1, FIG. 2, or FIG. 3, or may be applied to another electronic device. For ease of description, an example in which an execution body is a filtering device is used for description below. The filtering device may be understood as any electronic device having a picture filtering function, for example, the foregoing decoding device or encoding device.

As shown in FIG. 9, the method provided in this embodiment of this application includes the following operations.

S101: A filtering device determines input information of an NNLF based on a to-be-filtered picture.

The input information includes the to-be-filtered picture.

The to-be-filtered picture in this embodiment of this application may be understood as any picture that needs to be filtered, for example, a reconstructed picture or any other to-be-filtered picture.

In an example, the to-be-filtered picture may be a picture, for example, a frame of reconstructed picture or an entire reconstructed picture.

In an example, the to-be-filtered picture may be a local region in a picture, for example, a part of a reconstructed region of a reconstructed picture.

Specific content of the input information of the NNLF is not specifically limited in this embodiment of this application, as long as it is ensured that the input information includes the to-be-filtered picture.

For example, in some embodiments, the input information in this embodiment of this application only includes the to-be-filtered picture, and does not include other information.

In some embodiments, in addition to the to-be-filtered picture, the input information in this embodiment of this application further includes other related content of the to-be-filtered picture. For example, if the to-be-filtered picture is a reconstructed picture, in addition to the reconstructed picture, the input information further includes at least one of a predicted picture corresponding to the reconstructed picture, boundary strength, a slice type of the reconstructed picture, and QP information. In some embodiments, the QP information includes a slice QP and a base QP.

In some embodiments, the input information may further include related information of another to-be-filtered picture. This is not limited in this embodiment of this application.

Based on the foregoing operation, after determining the input information of the NNLF, the filtering device performs the following operation S102.

S102: The filtering device filters the input information through the NNLF to obtain a filtered picture of the to-be-filtered picture.

The NNLF includes a plurality of convolution layers configured to extract picture feature information, and the plurality of convolution layers are obtained by processing a standard convolution layer in at least two of an MLRF mode, a tensor decomposition mode, and a GC mode.

An existing NNLF can bring appreciable filtering performance through repeatedly stacked 3×3 convolution and RBs, but introduces excessively high operation complexity so that a balance between the filtering performance and the operation complexity cannot be achieved. To resolve the technical problem, the embodiments of this application provide a new NNLF. The NNLF includes a plurality of convolution layers configured to extract picture feature information, and the plurality of convolution layers are obtained by processing a standard convolution layer in at least two of an MLRF mode, a tensor decomposition mode, and a GC mode. For example, in the embodiments of this application, a standard convolution layer in the existing NNLF, for example, at least one standard convolution layer (for example, a 3×3 convolution layer) in the head, body, or tail of the NNLF shown in FIG. 6 or FIG. 8, is processed in at least two of the MLRF mode, the tensor decomposition mode, and the GC mode, and then converted into a convolution operation with low operation complexity. Thus, the filtering operation complexity of the NNLF is reduced without reducing the filtering performance of the NNLF, thereby improving the picture filtering effect.

Related technologies such as MLRF, tensor decomposition, and GC are described below.

For the MLRF, in the CNN, a size of a region in which a single element of each network layer output feature map is mapped to an input feature map is a receptive field. The existing NNLF usually uses a common 1×1 convolution layer or a 3×3 convolution layer as a basic component of a network structure. Due to different convolution window sizes, the number of elements of the processed input feature map is different, and different convolution layers usually have different receptive field sizes. To effectively extract and fuse input feature information, the 1×1 convolution layer and the 3×3 convolution layer may be used in parallel to acquire feature information at different receptive field levels, thereby improving the generalization of the neural network model.

CPD, alternatively referred to as CP decomposition, is a classic tensor decomposition mode, and may be used in a neural network to reduce the convolution calculation amount. As shown in FIG. 10, according to a CPD principle, a 3×3 convolution may be approximately represented by a 1×3 convolution and a 3×1 convolution, thereby effectively reducing the complexity of a convolution operation without significantly reducing the network performance.

GC is a variant of standard convolution, in which the number of channels inputted into the convolution is divided into G groups, and then standard convolution is performed on each group of features. Since the number of input channels of each group changes to 1/G, correspondingly, the number of needed convolution kernel channels also changes to 1/G. In this mode, the parameter amount and the operation amount may be reduced to 1/G of the original through the GC, thereby effectively reducing the complexity of the convolution operation.

The NNLF in this embodiment of this application may be understood as any NNLF in which at least one standard convolution layer in the existing NNLF is processed in at least two of the MLRF mode, the tensor decomposition mode, and the GC mode to obtain a plurality of convolution layers with low operation complexity.

In some embodiments, in this embodiment of this application, at least one standard convolution layer at the head of the NNLF shown in FIG. 6 may be processed in at least two of the MLRF mode, the tensor decomposition mode, and the GC mode, and then converted into a plurality of convolution layers with relatively low complexity.

In an example, in the tensor decomposition mode, a 3×3 convolution layer at the head of the NNLF shown in FIG. 6 is decomposed into a 1×3 convolution layer and a 3×1 convolution layer. Next, as shown in FIG. 11A, in the GC mode, input feature information of the 1×3 convolution layer is divided into a plurality of groups, convolution is performed on each group of feature information, and then the number of channels is merged as output information of the 1×3 convolution layer. In some embodiments, as shown in FIG. 11A, in the GC mode, input feature information of the 3×1 convolution layer may be divided into a plurality of groups, convolution is performed on each group of feature information, and then the number of channels is merged as output information of the 3×1 convolution layer.

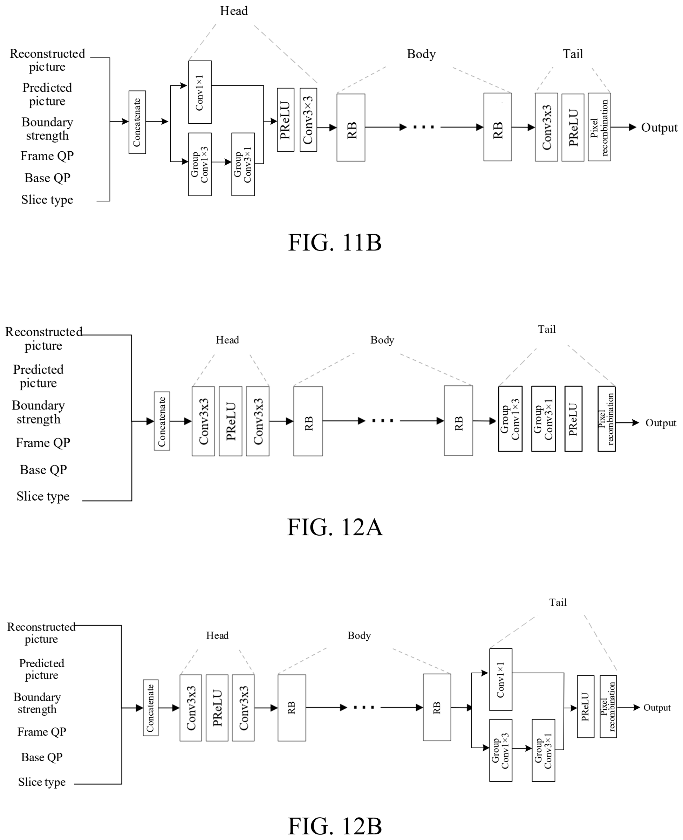

In an example, in the MLRF mode, the 3×3 convolution layer at the head of the NNLF shown in FIG. 6 is converted into a 1×1 convolution layer and a 3×3 convolution layers that are connected in parallel. Next, in the tensor decomposition mode, the 3×3 convolution layer in the parallel branch is decomposed into a 1×3 convolution layer and a 3×1 convolution layer. Next, as shown in FIG. 11B, in the GC mode, input feature information of the 1×3 convolution layer is divided into a plurality of groups, convolution is performed on each group of feature information, and then the number of channels is merged as output information of the 1×3 convolution layer. In some embodiments, as shown in FIG. 11B, in the GC mode, input feature information of the 3×1 convolution layer may be divided into a plurality of groups, convolution is performed on each group of feature information, and then the number of channels is merged as output information of the 3×1 convolution layer.

In some embodiments, in this embodiment of this application, at least one standard convolution layer at the tail of the NNLF shown in FIG. 6 may be processed in at least two of the MLRF mode, the tensor decomposition mode, and the GC mode, and then converted into a plurality of convolution layers with relatively low complexity.

In an example, in the tensor decomposition mode, a 3×3 convolution layer at the tail of the NNLF shown in FIG. 6 is decomposed into a 1×3 convolution layer and a 3×1 convolution layer. Next, as shown in FIG. 12A, in the GC mode, input feature information of the 1×3 convolution layer is divided into a plurality of groups, convolution is performed on each group of feature information, and then the number of channels is merged as output information of the 1×3 convolution layer. In some embodiments, as shown in FIG. 12A, in the GC mode, input feature information of the 3×1 convolution layer may be divided into a plurality of groups, convolution is performed on each group of feature information, and then the number of channels is merged as output information of the 3×1 convolution layer.

In an example, in the MLRF mode, the 3×3 convolution layer at the tail of the NNLF shown in FIG. 6 is converted into a 1×1 convolution layer and a 3×3 convolution layers that are connected in parallel. Next, in the tensor decomposition mode, the 3×3 convolution layer in the parallel branch is decomposed into a 1×3 convolution layer and a 3×1 convolution layer. Next, as shown in FIG. 12B, in the GC mode, input feature information of the 1×3 convolution layer is divided into a plurality of groups, convolution is performed on each group of feature information, and then the number of channels is merged as output information of the 1×3 convolution layer. In some embodiments, as shown in FIG. 12B, in the GC mode, input feature information of the 3×1 convolution layer may be divided into a plurality of groups, convolution is performed on each group of feature information, and then the number of channels is merged as output information of the 3×1 convolution layer.

In some embodiments, the NNLF in this embodiment of this application includes a residual unit. The residual unit includes a plurality of RBs sequentially connected. At least one RB, for example, an i^{th} RB, in the plurality of RBs includes all or part of the plurality of convolution layers obtained by processing the standard convolution layer in at least two of the MLRF mode, the tensor decomposition mode, and the GC mode, where i is a positive integer. That is, this embodiment of this application provides a new RB structure. The new RB structure may be understood as that at least one standard convolution layer in an existing RB is processed in at least two of the MLRF mode, the tensor decomposition mode, and the GC mode to obtain a plurality of convolution layers with relatively low operation complexity.

The residual unit in this embodiment of this application may be understood as the body in FIG. 6.

The NNLF shown in this embodiment includes a plurality of RBs, and at least one of the plurality of RBs may be understood as being obtained by processing the standard convolution layer in the existing RB shown in FIG. 7A to FIG. 7C. For example, the standard convolution layer of at least one of the plurality of RBs included in the body of the NNLF shown in FIG. 6 is processed in at least two of the MLRF mode, the tensor decomposition mode, and the GC mode to obtain at least one RB in this embodiment of this application. For ease of description, an i^{th} RB is used as an example herein for description.

For the i^{th} RB included in the residual unit of the NNLF, a network structure of the i^{th} RB mainly includes the following two cases.

Case 1: The filtering device processes the standard convolution layer based on the MLRF mode and the GC mode to obtain the i^{th} RB.

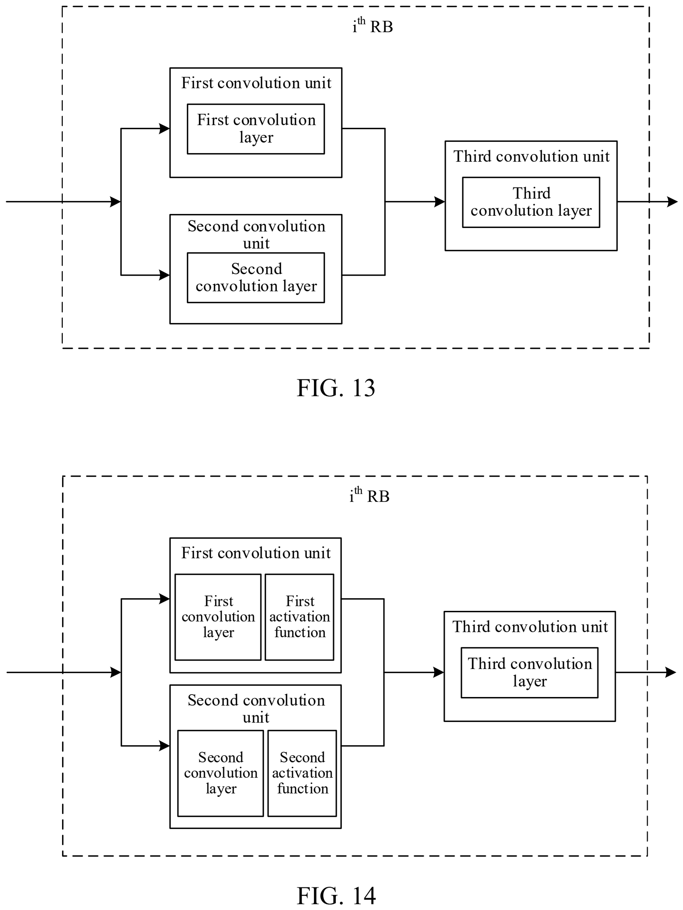

Specifically, as shown in FIG. 13, the i^{th} RB in this embodiment of this application includes a first convolution unit, a second convolution unit, and a third convolution unit, and the first convolution unit and the second convolution unit are connected in parallel and then connected in series to the third convolution unit. The first convolution unit includes a first convolution layer, the second convolution unit includes a second convolution layer, and the third convolution unit includes a third convolution layer. The convolution kernel sizes of the first convolution layer and the second convolution layer are different, and at least one of the first convolution layer, the second convolution layer, and the third convolution layer includes a GC layer. The GC layer is configured to divide, in the GC mode, input feature information of the GC layer into a plurality of groups based on the number of channels, perform convolution on each group of feature information, and then merge the number of channels as output information of the GC layer.

The number of convolution layers included in the first convolution unit, the second convolution unit, and the third convolution unit is not limited in this embodiment of this application. For example, at least one of the first convolution unit, the second convolution unit, and the third convolution unit includes one or more convolution layers.

In some embodiments, in addition to the convolution layer, at least one of the first convolution unit, the second convolution unit, and the third convolution unit may further include an activation function and the like.

The activation function in this embodiment of this application may be an activation function such as Sigmoid, ReLU, LeakyReLU, PReLU, or ELU.

In an example, as shown in FIG. 14, the first convolution unit includes a first convolution layer and a first activation function, the second convolution unit includes a second convolution layer and a second activation function, and the third convolution unit includes a third convolution layer.

It can be learned from FIG. 13 and FIG. 14 that, the first convolution layer and the second convolution layer are connected in parallel, and convolution kernel sizes of the first convolution layer and the second convolution layer are different. In this way, when the first convolution layer and the second convolution layer that are connected in parallel process the feature information, feature information at different receptive field levels may be obtained, thereby improving the generalization of the NNLF.

For example, the filtering device records input feature information inputted into the i^{th} RB as an (i-1)^{th} piece of feature information. A convolution kernel size of the first convolution layer is assumed to be 3×3, and a convolution kernel size of the second convolution layer is 1×1. In this way, the (i-1)^{th} piece of feature information is inputted into the i^{th} RB shown in FIG. 13 or FIG. 14, and the first convolution layer in the first convolution unit performs, on a 3×3 convolution window, feature extraction on the (i-1)^{th} piece of feature information to acquire feature information at a first receptive field level. Meanwhile, the second convolution layer in the second convolution unit performs, on a 1×1 convolution window, feature extraction on the (i-1)^{th} piece of feature information to acquire feature information at a second receptive field level. In this way, feature information at different receptive field levels may be acquired. Next, the extracted feature information at different receptive field levels is fused, then inputted into the third convolution unit for feature extraction again, and fused with the (i-1)^{th} piece of feature information to obtain output feature information of the i^{th} RB.

That is, the RB in this embodiment of this application may adopt the MLRF mode to acquire feature information at different receptive field levels, thereby improving the feature processing effect of the RB.

In addition, as shown in FIG. 13 or FIG. 14, at least one of the first convolution layer, the second convolution layer, and the third convolution layer includes a GC layer. The GC layer is configured to divide, in the GC mode, input feature information of the GC layer into a plurality of groups based on the number of channels, perform convolution on each group of feature information, and then merge the number of channels as output information of the GC layer.

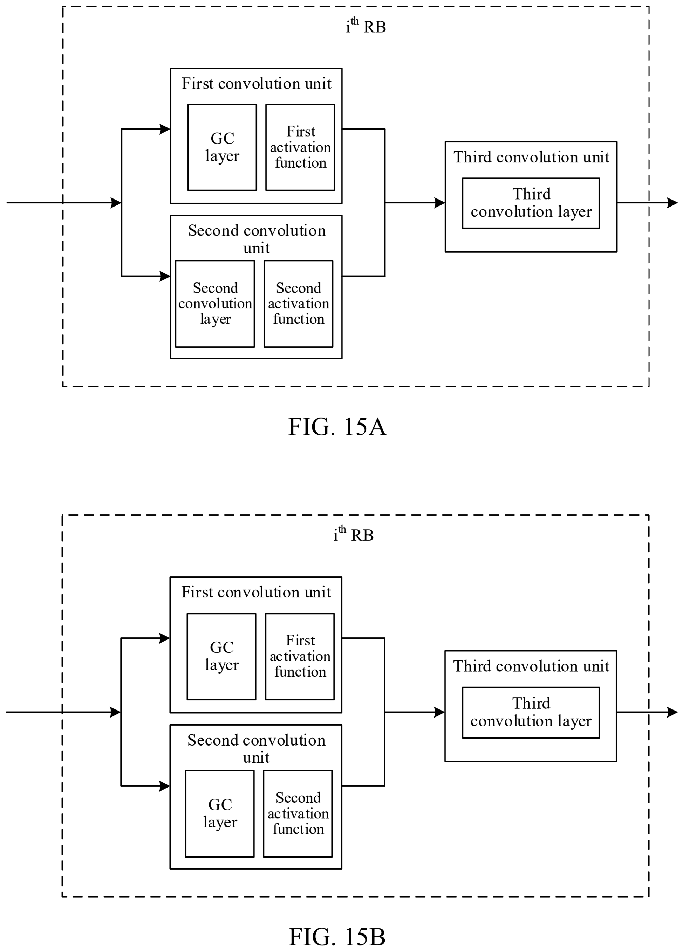

In an example, as shown in FIG. 15A, the first convolution layer includes a GC layer, and the second convolution layer and the third convolution layer are not GC layers. It is assumed that input information of the first convolution layer is the (i-1)^{th} piece of feature information, and the number of channels of the (i-1)^{th} piece of feature information is K. In this way, the filtering device inputs the (i-1)^{th} piece of feature information into the i^{th} RB. The first convolution layer of the i^{th} RB divides the (i-1)^{th} piece of feature information into a plurality of groups based on the number of channels of the (i-1)^{th} piece of feature information, performs a standard convolution operation on each of the plurality of groups of feature information obtained by division, to obtain feature information obtained after the convolution operation of each group of feature information, and then merges the number of channels of the feature information obtained after the convolution operation of each group of feature information, to obtain output feature information of the first convolution layer.

For example, assuming that the number of channels of the (i-1)^{th} piece of feature information is 100, the (i-1)^{th} piece of feature information is divided into 10 groups, which are recorded as a first group of feature information, a second group of feature information, a third group of feature information, ..., and a tenth group of feature information, and the number of channels of each group is 10. Next, a standard convolution operation is separately performed on the first group of feature information, the second group of feature information, the third group of feature information, ..., and the tenth group of feature information, to obtain feature information 1 obtained after the convolution operation of the first group of feature information, feature information 2 obtained after the convolution operation of the second group of feature information, feature information 3 obtained after the convolution operation of the third group of feature information, ..., and feature information 10 obtained after the convolution operation of the tenth group of feature information. Next, the number of channels of the feature information 1, the feature information 2, the feature information 3, ..., and the feature information 10 is merged, that is, the number of channels is concatenated to obtain the output feature information of the first convolution layer.

It can be learned from the foregoing description that in this embodiment of this application, in the GC mode, a convolution operation with the number of channels being K (for example, 100) is divided into G (for example, 10) convolution operations with the number of channels being K/G (for example, 10), and an operation amount of the convolution operation with the number of channels being K/G is greatly less than that of the convolution operation with the number of channels being K. In this way, the parameter amount and the operation amount may be reduced to 1/G of the original through the GC, thereby effectively reducing the complexity of the convolution operation.

In an example, as shown in FIG. 15B, the first convolution layer and the second convolution layer each include a GC layer, and the third convolution layer is not a GC layer. It is assumed that input information of the first convolution layer and the second convolution layer is an (i-1)^{th} piece of feature information, and the number of channels of the (i-1)^{th} piece of feature information is K. In this way, the filtering device inputs the (i-1)^{th} piece of feature information into the i^{th} RB. The first convolution layer of the i^{th} RB divides the (i-1)^{th} piece of feature information into a plurality of groups based on the number of channels of the (i-1)^{th} piece of feature information, performs a standard convolution operation on each of the plurality of groups of feature information obtained by division, to obtain feature information obtained after the convolution operation of each group of feature information, and then merges the number of channels of the feature information obtained after the convolution operation of each group of feature information, to obtain output feature information of the first convolution layer. Similarly, the second convolution layer of the i^{th} RB divides the (i-1)^{th} piece of feature information into a plurality of groups based on the number of channels of the (i-1)^{th} piece of feature information, performs a standard convolution operation on each of the plurality of groups of feature information obtained by division, to obtain feature information obtained after the convolution operation of each group of feature information, and then merges the number of channels of the feature information obtained after the convolution operation of each group of feature information, to obtain output feature information of the second convolution layer.

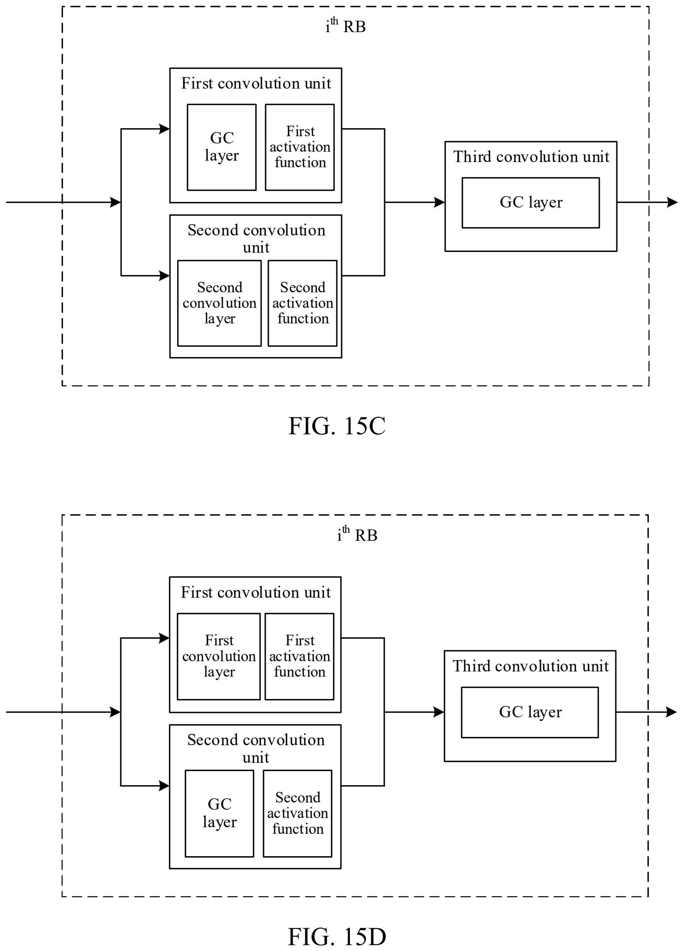

In an example, as shown in FIG. 15C, the first convolution layer and the third convolution layer each include a GC layer, and the second convolution layer is not a GC layer. It is assumed that input information of the first convolution layer is the (i-1)^{th} piece of feature information, and the number of channels of the (i-1)^{th} piece of feature information is K. In this way, the filtering device inputs the (i-1)^{th} piece of feature information into the i^{th} RB. The first convolution layer of the i^{th} RB divides the (i-1)^{th} piece of feature information into a plurality of groups based on the number of channels of the (i-1)^{th} piece of feature information, performs a standard convolution operation on each of the plurality of groups of feature information obtained by division, to obtain feature information obtained after the convolution operation of each group of feature information, and then merges the number of channels of the feature information obtained after the convolution operation of each group of feature information, to obtain output feature information of the first convolution layer, which is recorded as first feature information. Meanwhile, the convolution operation is performed on the (i-1)^{th} piece of feature information through the second convolution layer to obtain second feature information. Next, the first feature information and the second feature information are concatenated to obtain third feature information. It is assumed that the number of channels of the third feature information is K1. The third feature information is inputted into the third convolution layer. The third convolution layer divides the third feature information into a plurality of groups based on the number of channels K1 of the third feature information, performs a standard convolution operation on each of the plurality of groups of feature information obtained by division, to obtain feature information obtained after the convolution operation of each group of feature information, and then merges the number of channels of the feature information obtained after the convolution operation of each group of feature information, to obtain output feature information of the third convolution layer.

In an example, as shown in FIG. 15D, the second convolution layer and the third convolution layer each include a GC layer, and the first convolution layer is not a GC layer. It is assumed that input information of the second convolution layer is the (i-1)^{th} piece of feature information, and the number of channels of the (i-1)^{th} piece of feature information is K. In this way, the filtering device inputs the (i-1)^{th} piece of feature information into the i^{th} RB, and the first convolution layer of the i^{th} RB performs a standard convolution operation on the (i-1)^{th} piece of feature information to obtain first feature information. The second convolution layer of the i^{th} RB divides the (i-1)^{th} piece of feature information into a plurality of groups based on the number of channels of the (i-1)^{th} piece of feature information, performs a standard convolution operation on each of the plurality of groups of feature information obtained by division, to obtain feature information obtained after the convolution operation of each group of feature information, and then merges the number of channels of the feature information obtained after the convolution operation of each group of feature information, to obtain output feature information of the second convolution layer, which is recorded as second feature information. Next, the first feature information and the second feature information are concatenated to obtain third feature information. It is assumed that the number of channels of the third feature information is K1. The third feature information is inputted into the third convolution layer. The third convolution layer divides the third feature information into a plurality of groups based on the number of channels K1 of the third feature information, performs a standard convolution operation on each of the plurality of groups of feature information obtained by division, to obtain feature information obtained after the convolution operation of each group of feature information, and then merges the number of channels of the feature information obtained after the convolution operation of each group of feature information, to obtain output feature information of the third convolution layer.

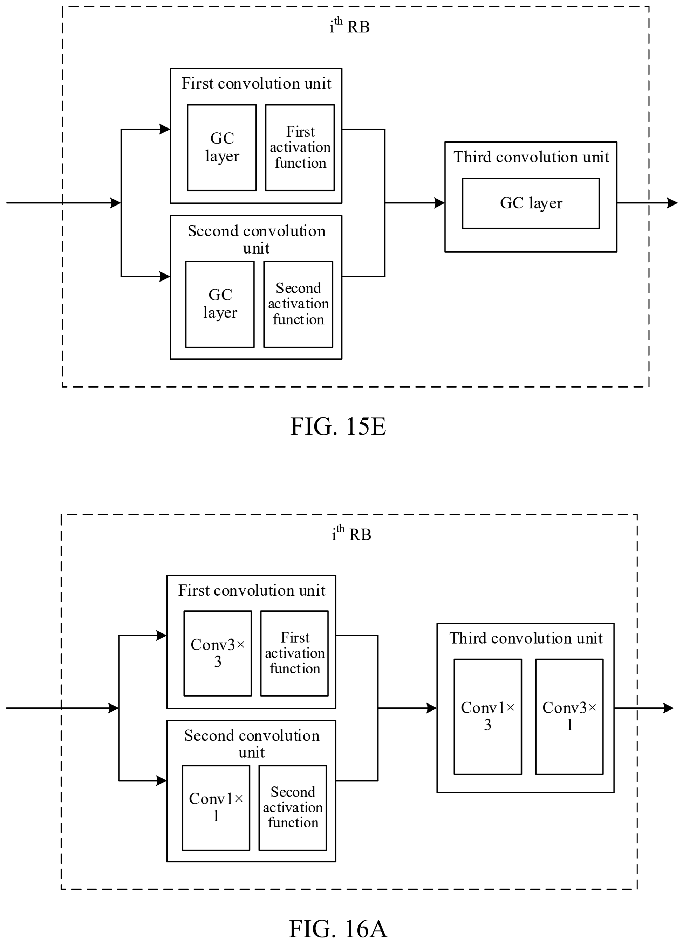

In an example, as shown in FIG. 15E, the first convolution layer, the second convolution layer, and the third convolution layer each include a GC layer. It is assumed that input information of the first convolution layer and the second convolution layer is an (i-1)^{th} piece of feature information, and the number of channels of the (i-1)^{th} piece of feature information is K. In this way, the filtering device inputs the (i-1)^{th} piece of feature information into the i^{th} RB. The first convolution layer of the i^{th} RB divides the (i-1)^{th} piece of feature information into a plurality of groups based on the number of channels of the (i-1)^{th} piece of feature information, performs a standard convolution operation on each of the plurality of groups of feature information obtained by division, to obtain feature information obtained after the convolution operation of each group of feature information, and then merges the number of channels, to obtain first feature information outputted by the first convolution layer. The second convolution layer of the i^{th} RB divides the (i-1)^{th} piece of feature information into a plurality of groups based on the number of channels of the (i-1)^{th} piece of feature information, performs a standard convolution operation on each of the plurality of groups of feature information obtained by division, to obtain feature information obtained after the convolution operation of each group of feature information, and then merges the number of channels, to obtain second feature information outputted by the second convolution layer. Next, the first feature information and the second feature information are concatenated to obtain third feature information. It is assumed that the number of channels of the third feature information is K1. The third feature information is inputted into the third convolution layer. The third convolution layer divides the third feature information into a plurality of groups based on the number of channels K1 of the third feature information, performs a standard convolution operation on each of the plurality of groups of feature information obtained by division, to obtain feature information obtained after the convolution operation of each group of feature information, and then merges the number of channels, to obtain output feature information of the third convolution layer.

FIG. 15A to FIG. 15E describe a network structure of the i^{th} RB when at least one of the first convolution layer, the second convolution layer, and the third convolution layer includes a GC layer.

In some embodiments, some of the first convolution layer, the second convolution layer, and the third convolution layer include a GC layer, and some of the convolution layers include a sub-convolution layer obtained by CPD. For example, some of the first convolution layer, the second convolution layer, and the third convolution layer include a GC layer, and at least one of the remaining convolution layers includes a sub-convolution layer obtained by performing tensor decomposition on a convolution layer having a convolution kernel size of m×n, where m and n are both positive integers greater than 2.

In an example, the first convolution layer and/or the second convolution layer includes a GC layer, and the third convolution layer includes two sub-convolution layers obtained in the tensor decomposition mode. As shown in FIG. 16A, the first convolution layer is a GC layer having a convolution kernel size of 3×3, the second convolution layer is a convolution layer having a convolution kernel size of 1×1, and the third convolution layer includes a 1×3 sub-convolution layer and a 3×1 sub-convolution layer. In this way, a 3×3 convolution operation is decomposed into a 1×3 simple convolution operation and a 3×1 simple convolution operation so that the operation complexity of the convolution operation may be greatly reduced, thereby improving the picture filtering efficiency.

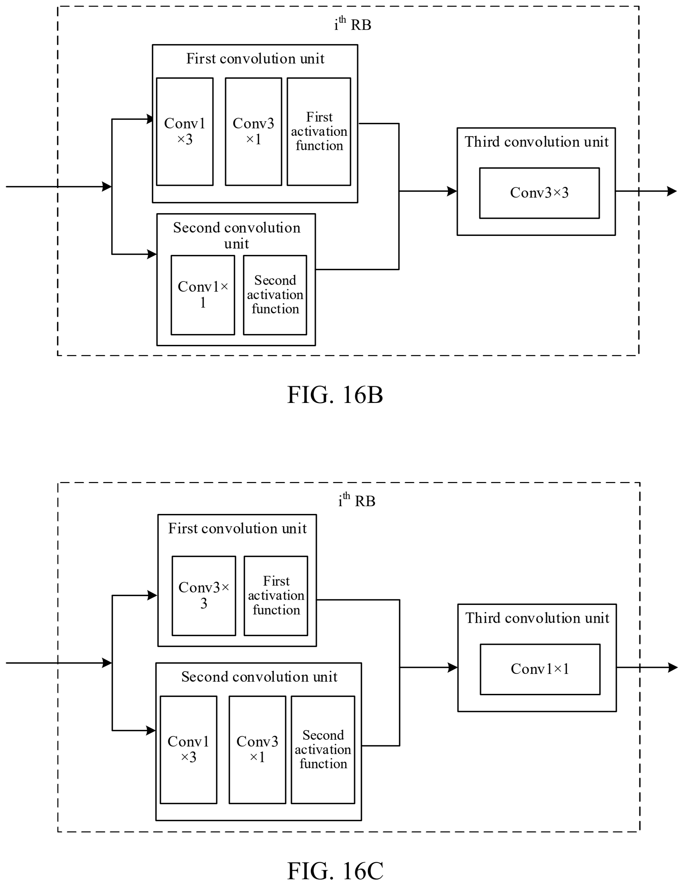

In an example, the third convolution layer and/or the second convolution layer includes a GC layer, and the first convolution layer includes two sub-convolution layers obtained in the tensor decomposition mode. As shown in FIG. 16B, the third convolution layer is a GC layer having a convolution kernel size of 3×3, the second convolution layer is a convolution layer having a convolution kernel size of 1×1, and the first convolution layer includes a 1×3 sub-convolution layer and a 3×1 sub-convolution layer.

In an example, the third convolution layer and/or the first convolution layer includes a GC layer, and the second convolution layer includes two sub-convolution layers obtained in the tensor decomposition mode. As shown in FIG. 16C, the first convolution layer is a GC layer having a convolution kernel size of 3×3, the third convolution layer is a convolution layer having a convolution kernel size of 1×1, and the second convolution layer includes a 1×3 sub-convolution layer and a 3×1 sub-convolution layer.

The foregoing example describes a network structure in which one or two of the first convolution layer, the second convolution layer, and the third convolution layer includes a GC layer, and the other convolution layer includes two sub-convolution layers obtained in the tensor decomposition mode. In some embodiments, one of the first convolution layer, the second convolution layer, and the third convolution layer includes a GC layer, and the other two convolution layers each include a network structure of two sub-convolution layers obtained in the tensor decomposition mode.

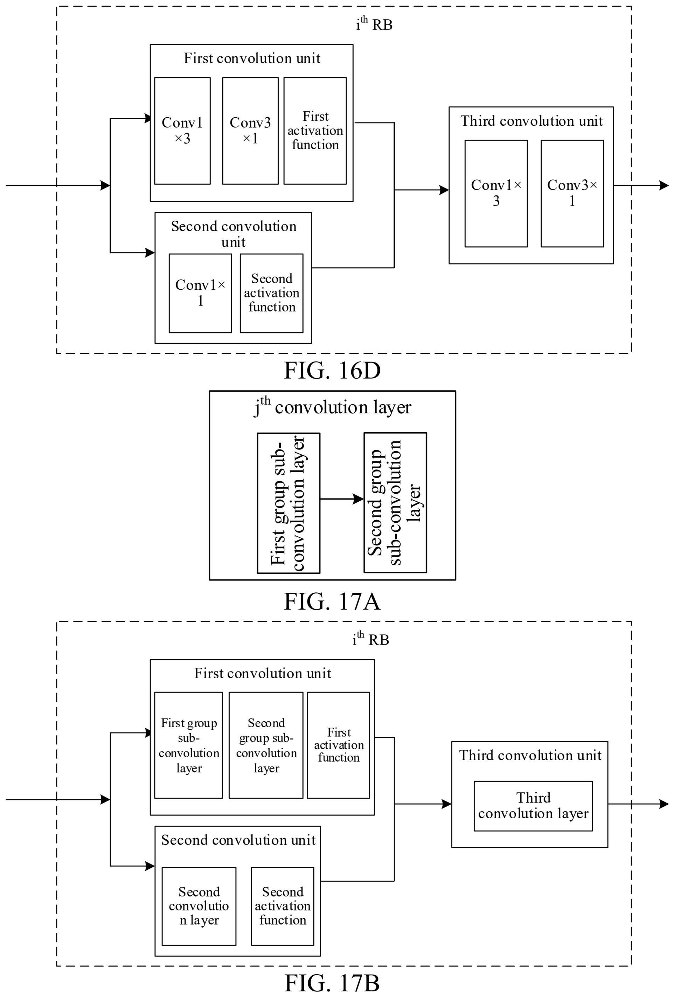

For example, the second convolution layer includes a GC layer, and the first convolution layer and the second convolution layer each include two sub-convolution layers obtained in the tensor decomposition mode. As shown in FIG. 16D, the second convolution layer is a GC layer having a convolution kernel size of 1×1, the first convolution layer includes a 1×3 sub-convolution layer and a 3×1 sub-convolution layer, and the third convolution layer also includes a 1×3 sub-convolution layer and a 3×1 sub-convolution layer.

In this embodiment, a specific implementation in which some of the first convolution layer, the second convolution layer, and the third convolution layer in the i^{th} convolution kernel include the GC layer, and some convolution layers each include at least two sub-convolution layers obtained by CPD includes, but is not limited to, the cases shown in the foregoing several examples, and the implementation includes any other possibilities.

In some embodiments, for a j^{th} convolution layer in the first convolution layer, the second convolution layer, and the third convolution layer, as shown in FIG. 17A, the j^{th} convolution layer includes: a first group sub-convolution layer and a second group sub-convolution layer obtained by performing, in the tensor decomposition mode and the GC mode, decomposition and channel grouping on a convolution layer having a convolution kernel size of m×n, m and n being both positive integers greater than 2, and j being a positive integer.

The convolution kernel sizes of the first GC layer and the second GC layer are not limited in this embodiment of this application, as long as the convolution kernel sizes of the first GC layer and the second GC layer are both less than m×n.

In an example, a convolution kernel size of the first group sub-convolution layer is 1×n, and a convolution kernel size of the second group sub-convolution layer is m×1.

In this embodiment, at least one of the first convolution layer, the second convolution layer, and the third convolution layer simultaneously adopts the tensor decomposition mode and the GC mode. For ease of description, the j^{th} convolution layer is used as an example herein for description.

In this embodiment, in the tensor decomposition mode and the GC mode, decomposition and channel grouping are performed on the convolution layer having the convolution kernel size of m×n, to obtain the first group sub-convolution layer and the second group sub-convolution layer. The convolution kernel sizes of the first group sub-convolution layer and the second group sub-convolution layer are both less than m×n. Illustratively, in the tensor decomposition mode, the convolution layer having the convolution kernel size of m×n may be first decomposed into two sub-convolution layers, which are recorded as a first sub-convolution layer and a second sub-convolution layer. Next, in the GC mode, convolution is performed on the first sub-convolution layer to obtain the first group sub-convolution layer. In the GC mode, convolution is performed on the second sub-convolution layer to obtain the second group sub-convolution layer. In this embodiment of this application, through the tensor decomposition, a convolution operation of a large convolution kernel is decomposed into a convolution operation of a small convolution kernel, to reduce the operation complexity of the convolution operation. Meanwhile, through grouping, a convolution operation with a large number of channels is decomposed into a convolution operation with a small number of channels so that the operation complexity of the convolution operation may be further reduced, thereby greatly improving the picture filtering efficiency.

For example, it is assumed that the number of channels of input feature information of the j^{th} convolution layer is K, a convolution kernel size of the first GC layer is 1×n, and a convolution kernel size of the second GC layer is m×1. In this way, the filtering device inputs the input feature information with the number of channels being K into the j convolution layers. The first GC layer of the j convolution layers divides the input feature information with the number of channels being K into G groups, performs a 1×n convolution operation on each group of feature information, and then merges the number of channels, to obtain feature information 1 outputted by the first GC layer. It is assumed that the number of channels of the feature information 1 is H, and then the feature information 1 with the number of channels being H is inputted into the second GC layer. The second GC layer divides the feature information 1 with the number of channels being H into P groups, performs an m×1 convolution operation on each group of feature information, and then merges the number of channels, to obtain feature information 2 outputted by the second GC layer.

A network structure of the i^{th} RB shown in this embodiment is described below in conjunction with specific examples.

In an example, as shown in FIG. 17B, the first convolution layer includes a first group sub-convolution layer and a second group sub-convolution layer obtained by performing, in the tensor decomposition mode and the GC mode, decomposition and channel grouping on a convolution layer having a convolution kernel size of m×n. A convolution kernel size of the first GC layer is 1×n, and a convolution kernel size of the second GC layer is m×1. It is assumed that input information of the first convolution layer and the second convolution layer is an (i-1)^{th} piece of feature information, and the number of channels of the (i-1)^{th} piece of feature information is K. In this way, the filtering device inputs feature information with the number of channels being K into the first convolution layer. The first GC layer in the first convolution layer divides the input feature information with the number of channels being K into G groups, performs an m×1 convolution operation on each group of feature information, and then merges the number of channels, to obtain feature information 1 outputted by the first GC layer. It is assumed that the number of channels of the feature information 1 is H, and then the feature information 1 with the number of channels being H is inputted into the second GC layer. The second GC layer divides the feature information 1 with the number of channels being H into P groups, performs a 1×n convolution operation on each group of feature information, and then merges the number of channels, to obtain feature information 2 outputted by the second GC layer. First feature information outputted by the first convolution unit is obtained based on the feature information 2. The second convolution layer performs an operation such as convolution on the (i-1)^{th} piece of feature information to obtain second feature information outputted by the second convolution unit, merges the first feature information and the second feature information, and inputs the merged information into the third convolution layer to perform a convolution operation, to obtain output feature information of the i^{th} RB.

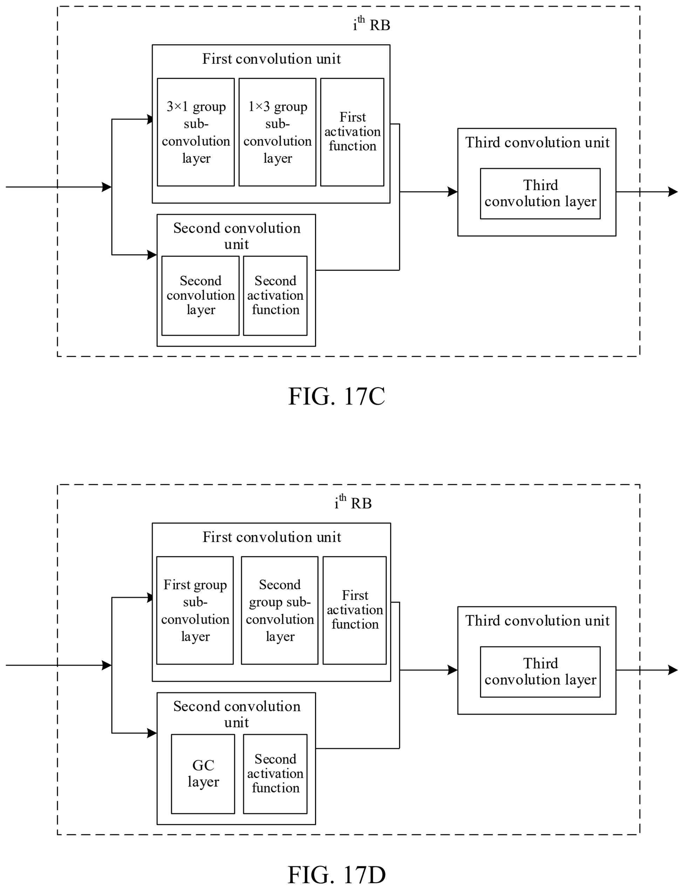

For example, as shown in FIG. 17C, the first convolution layer includes a first group sub-convolution layer having a convolution kernel size of 1×3 and a second group sub-convolution layer having a convolution kernel size of 3×1 obtained by performing, in the tensor decomposition mode and the GC mode, decomposition and channel grouping on a convolution layer having a convolution kernel size of 3×3. The filtering device divides input feature information with the number of channels being K into G groups through the first GC layer, performs a 3×1 convolution operation on each group of feature information, and then merges the number of channels, to obtain feature information 1 outputted by the first GC layer. It is assumed that the number of channels of the feature information 1 is H, and then the feature information 1 with the number of channels being H is inputted into the second GC layer. The second GC layer divides the feature information 1 with the number of channels being H into P groups, performs a 1×3 convolution operation on each group of feature information, and then merges the number of channels, to obtain feature information 2 outputted by the second GC layer. The feature information 2 is processed through a first activation function to obtain first feature information outputted by the first convolution unit. After the second convolution layer performs the convolution operation on the (i-1)^{th} piece of feature information, the (i-1)^{th} piece of feature information is processed through a second activation function to obtain second feature information outputted by the second convolution unit. After the first feature information and the second feature information are merged, the merged information is inputted into the third convolution layer to perform an operation such as convolution, to obtain output feature information of the i^{th} RB.

In an example, as shown in FIG. 17D, the first convolution layer includes a first group sub-convolution layer and a second group sub-convolution layer obtained by performing, in the tensor decomposition mode and the GC mode, decomposition and channel grouping on a convolution layer having a convolution kernel size of m×n. A convolution kernel size of the first GC layer is 1×n, and a convolution kernel size of the second GC layer is m×1. At least one of the second convolution layer and the third convolution layer includes a GC layer. It is assumed that input information of the first convolution layer and the second convolution layer is an (i-1)^{th} piece of feature information, and the number of channels of the (i-1)^{th} piece of feature information is K. In this way, the filtering device inputs feature information with the number of channels being K into the first convolution layer. The first GC layer in the first convolution layer divides the input feature information with the number of channels being K into G groups, performs an m×1 convolution operation on each group of feature information, and then merges the number of channels, to obtain feature information 1 outputted by the first GC layer. It is assumed that the number of channels of the feature information 1 is H, and then the feature information 1 with the number of channels being H is inputted into the second GC layer. The second GC layer divides the feature information 1 with the number of channels being H into P groups, performs a 1×n convolution operation on each group of feature information, and then merges the number of channels, to obtain feature information 2 outputted by the second GC layer. First feature information outputted by the first convolution unit is obtained based on the feature information 2. The second convolution layer performs an operation such as convolution (or GC) on the (i-1)^{th} piece of feature information to obtain second feature information outputted by the second convolution unit, merges the first feature information and the second feature information, and inputs the merged information into the third convolution layer to perform an operation such as convolution (or GC), to obtain output feature information of the i^{th} RB.

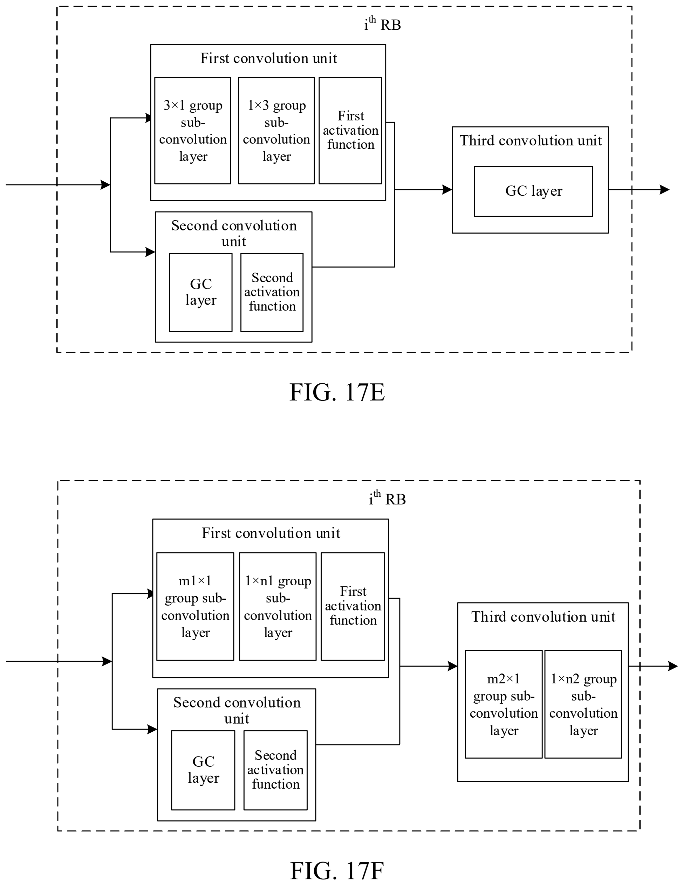

For example, as shown in FIG. 17E, the first convolution layer includes a first group sub-convolution layer having a convolution kernel size of 1×3 and a second group sub-convolution layer having a convolution kernel size of 3×1 obtained by performing, in the tensor decomposition mode and the GC mode, decomposition and channel grouping on a convolution layer having a convolution kernel size of 3×3. The second convolution layer and the third convolution layer each include a GC layer. The first GC layer divides input feature information with the number of channels being K into G groups, performs a 3×1 convolution operation on each group of feature information, and then merges the number of channels, to obtain feature information 1 outputted by the first GC layer. It is assumed that the number of channels of the feature information 1 is H, and then the feature information 1 with the number of channels being H is inputted into the second GC layer. The second GC layer divides the feature information 1 with the number of channels being H into P groups, performs a 1×3 convolution operation on each group of feature information, and then merges the number of channels, to obtain feature information 2 outputted by the second GC layer. The feature information 2 is processed through a first activation function to obtain first feature information outputted by the first convolution unit. After the second convolution layer performs the GC operation on the (i-1)^{th} piece of feature information, the (i-1)^{th} piece of feature information is processed through a second activation function to obtain second feature information outputted by the second convolution unit. After the first feature information and the second feature information are merged, the merged information is inputted into the third convolution layer to perform an operation such as GC, to obtain output feature information of the i^{th} RB.

In an example, as shown in FIG. 17F, the first convolution layer includes a group sub-convolution layer having a convolution kernel size of 1×n1 and a group sub-convolution layer having a convolution kernel size of m1×1 obtained by performing, in the tensor decomposition mode and the GC mode, decomposition and channel grouping on a convolution layer having a convolution kernel size of m1×n1. The third convolution layer includes a group sub-convolution layer having a convolution kernel size of 1×n2 and a group sub-convolution layer having a convolution kernel size of m2×1 obtained by performing, in the tensor decomposition mode and the GC mode, decomposition and channel grouping on a convolution layer having a convolution kernel size of m2×n2. It is assumed that input information of the first convolution layer and the second convolution layer is an (i-1)^{th} piece of feature information, and the number of channels of the (i-1)^{th} piece of feature information is K. In this way, the filtering device inputs feature information with the number of channels being K into the first convolution layer. The group sub-convolution layer having the convolution kernel size of m1×1 in the first convolution layer divides the input feature information with the number of channels being K into G groups, performs an m1×1 convolution operation on each group of feature information, and then merges the number of channels, to obtain feature information 1 outputted by the group sub-convolution layer having the convolution kernel size of m1×1. It is assumed that the number of channels of the feature information 1 is H, and then the feature information 1 with the number of channels being H is inputted into the group sub-convolution layer having the convolution kernel size of 1×n1. The group sub-convolution layer having the convolution kernel size of 1×n1 divides the feature information 1 with the number of channels being H into P groups, performs a 1×n1 convolution operation on each group of feature information, and then merges the number of channels, to obtain feature information 2 outputted by the group sub-convolution layer having the convolution kernel size of 1×n1. First feature information outputted by the first convolution unit is obtained based on the feature information 2. The second convolution layer performs an operation such as convolution (or GC) on the (i-1)^{th} piece of feature information to obtain second feature information outputted by the second convolution unit, and merges the first feature information and the second feature information to obtain third feature information. The number of channels of the third feature information is assumed to be Q, and Q is a positive integer greater than 1. Next, the third feature information is inputted into the third convolution layer. The group sub-convolution layer having the convolution kernel size of m2×1 in the third convolution layer divides the third feature information with the number of channels being Q into R groups, performs an m2×1 convolution operation on each group of feature information, and then merges the number of channels, to obtain feature information 3 outputted by the group sub-convolution layer having the convolution kernel size of m2×1. It is assumed that the number of channels of the feature information 3 is S, and then the feature information 3 with the number of channels being S is inputted into the group sub-convolution layer having the convolution kernel size of 1×n2. The group sub-convolution layer having the convolution kernel size of 1×n2 divides the feature information 3 with the number of channels being S into T groups, performs a 1×n2 convolution operation on each group of feature information, and then merges the number of channels, to obtain feature information 4 outputted by the group sub-convolution layer having the convolution kernel size of 1×n2. Output feature information of the i^{th} RB is obtained based on the feature information 4.

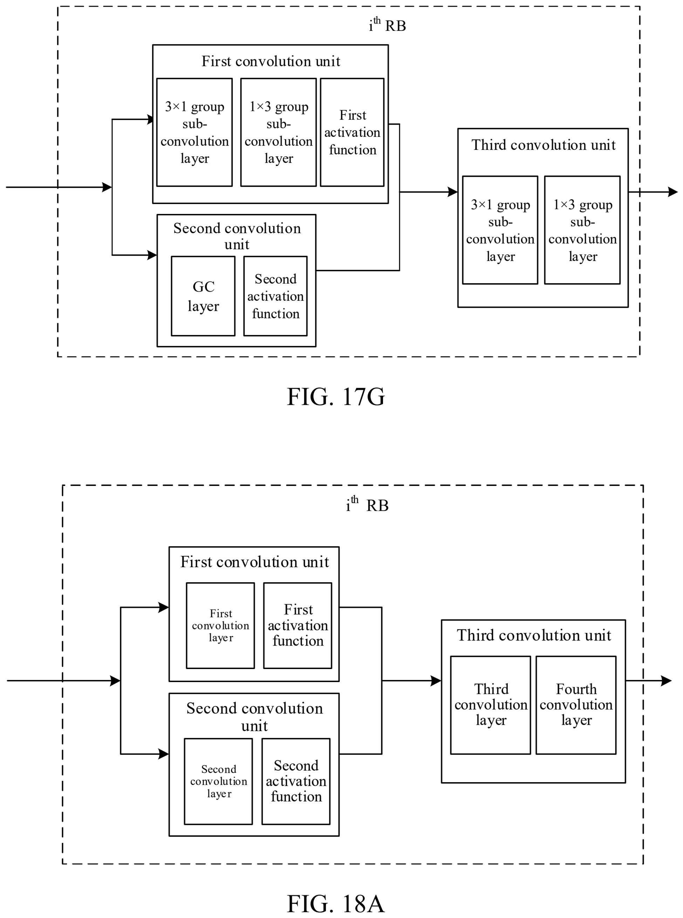

For example, as shown in FIG. 17G, the first convolution layer includes a group sub-convolution layer having a convolution kernel size of 1×3 and a group sub-convolution layer having a convolution kernel size of 3×1 obtained by performing, in the tensor decomposition mode and the GC mode, decomposition and channel grouping on a convolution layer having a convolution kernel size of 3×3. The third convolution layer includes a group sub-convolution layer having a convolution kernel size of 1×3 and a group sub-convolution layer having a convolution kernel size of 3×1 obtained by performing, in the tensor decomposition mode and the GC mode, decomposition and channel grouping on a convolution layer having a convolution kernel size of 3×3. The second convolution layer includes a GC layer. It is assumed that input information of the first convolution layer and the second convolution layer is an (i-1)^{th} piece of feature information, and the number of channels of the (i-1)^{th} piece of feature information is K. In this way, the filtering device inputs feature information with the number of channels being K into the first convolution layer. The group sub-convolution layer having the convolution kernel size of 3×1 in the first convolution layer divides the input feature information with the number of channels being K into G groups, performs a 3×1 convolution operation on each group of feature information, and then merges the number of channels, to obtain feature information 1 outputted by the group sub-convolution layer having the convolution kernel size of 3×1. It is assumed that the number of channels of the feature information 1 is H, and then the feature information 1 with the number of channels being H is inputted into the group sub-convolution layer having the convolution kernel size of 1×3. The group sub-convolution layer having the convolution kernel size of 1×3 divides the feature information 1 with the number of channels being H into P groups, performs a 1×3 convolution operation on each group of feature information, and then merges the number of channels, to obtain feature information 2 outputted by the group sub-convolution layer having the convolution kernel size of 1×3. First feature information outputted by the first convolution unit is obtained based on the feature information 2. The second convolution layer performs an operation such as convolution (or GC) on the (i-1)^{th} piece of feature information to obtain second feature information outputted by the second convolution unit, and merges the first feature information and the second feature information to obtain third feature information. The number of channels of the third feature information is assumed to be Q, and Q is a positive integer greater than 1. Next, the third feature information is inputted into the third convolution layer. The group sub-convolution layer having the convolution kernel size of 3×1 in the third convolution layer divides the third feature information with the number of channels being Q into R groups, performs a 3×1 convolution operation on each group of feature information, and then merges the number of channels, to obtain feature information 3 outputted by the group sub-convolution layer having the convolution kernel size of 3×1. It is assumed that the number of channels of the feature information 3 is S, and then the feature information 3 with the number of channels being S is inputted into the group sub-convolution layer having the convolution kernel size of 1×3. The group sub-convolution layer having the convolution kernel size of 1×3 divides the feature information 3 with the number of channels being S into T groups, performs a 1×3 convolution operation on each group of feature information, and then merges the number of channels, to obtain feature information 4 outputted by the group sub-convolution layer having the convolution kernel size of 1×3. Output feature information of the i^{th} RB is obtained based on the feature information 4.

It can be learned from the foregoing description that in this embodiment, at least one of the first convolution layer, the second convolution layer, and the second convolution layer in the i^{th} RB includes the first group sub-convolution layer and the second group sub-convolution layer obtained by performing, in the tensor decomposition mode and the GC mode, decomposition and channel grouping on the convolution layer having the convolution kernel size of m×n. In some embodiments, remaining convolution layers of the first convolution layer, the second convolution layer, and the third convolution layer each include a GC layer. That is, in this embodiment of this application, based on the MLRF mode, at least one m×n standard convolution layer (m and n are positive integers greater than or equal to 3) in the existing RB may be replaced with both CPD and GC, and/or at least one (i and j are positive integers) of the remaining i×j standard convolutions in the existing RB may be replaced with the GC.

In some embodiments, based on the foregoing embodiments, as shown in FIG. 18A, in addition to the third convolution layer, the third convolution unit in this embodiment of this application further includes a fourth convolution layer. The fourth convolution layer is connected in series to the third convolution layer.

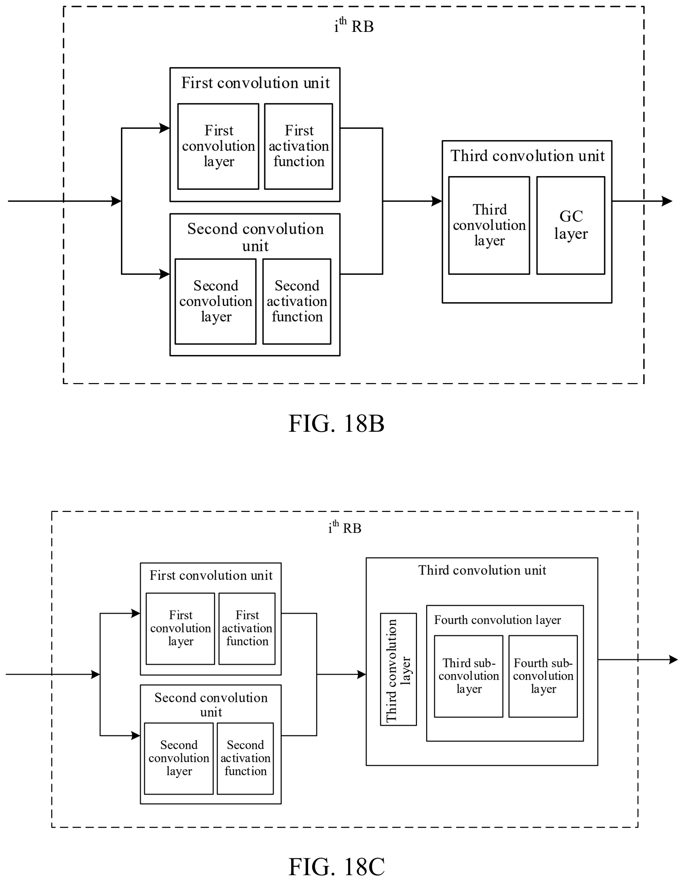

In some embodiments, as shown in FIG. 18B, the fourth convolution layer includes a GC layer. For example, assuming that feature information outputted by the third convolution layer is recorded as fourth feature information, and the number of channels of the fourth feature information is recorded as K2, the filtering device inputs the fourth feature information outputted by the third convolution layer into the fourth convolution layer. The fourth convolution layer divides the fourth feature information with the number of channels being K2 into a plurality of groups, performs a standard convolution operation on each of the plurality of groups of feature information obtained by division, to obtain feature information obtained after the convolution operation of each group of feature information, and then merges the number of channels of the feature information obtained after the convolution operation of each group of feature information, to obtain output feature information of the fourth convolution layer. Finally, feature information outputted by the fourth convolution layer and input feature information, for example, an (i-1)^{th} piece of feature information, of the i^{th} RB are added to obtain output feature information of the i^{th} RB.

In some embodiments, as shown in FIG. 18C, in the tensor decomposition mode, a convolution layer having a convolution kernel size of p×q is decomposed to obtain a third sub-convolution layer and a fourth sub-convolution layer, where p and q are both positive integers greater than 2.

Convolution kernel sizes of the third sub-convolution layer and the fourth sub-convolution layer are not limited in this embodiment of this application, as long as the convolution kernel sizes are less than p×q.

In an example, the convolution kernel size of the third sub-convolution layer is 1×q, and the convolution kernel size of the fourth sub-convolution layer is p×1.

In this embodiment, as shown in FIG. 18C, it is assumed that feature information outputted by the third convolution layer is recorded as fourth feature information. The filtering device inputs the fourth feature information outputted by the third convolution layer into the fourth convolution layer, and the third sub-convolution layer in the fourth convolution layer performs a 1×q simple convolution operation on the fourth feature information, to output fifth feature information. Next, the fifth feature information is inputted into the fourth sub-convolution layer to perform a p×1 simple convolution operation, to output sixth feature information. Finally, the sixth feature information outputted by the fourth convolution layer and input feature information, for example, an (i-1)^{th} piece of feature information, of the i^{th} RB are added to obtain output feature information of the i^{th} RB. In this way, the fourth convolution layer decomposes a p×q complex convolution operation into two simple 1×q and p×1 convolution operations, thereby reducing the picture filtering complexity and improving the picture filtering efficiency.

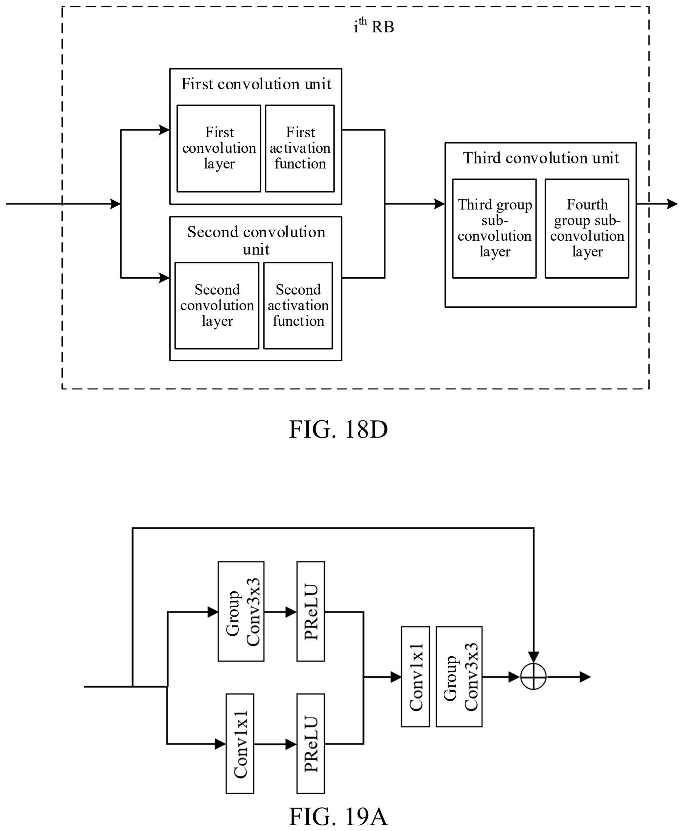

In some embodiments, as shown in FIG. 18D, the fourth convolution layer includes: a third group sub-convolution layer and a fourth group sub-convolution layer obtained by performing, in the tensor decomposition mode and the GC mode, decomposition and channel grouping on the convolution layer having the convolution kernel size of p×q.

In this embodiment, as shown in FIG. 18D, feature information outputted by the third convolution layer is recorded as fourth feature information. It is assumed that the number of channels of the fourth feature information is K2, a convolution kernel size of the third group sub-convolution layer is 1×q, and a convolution kernel size of the fourth group sub-convolution layer is p×1. The filtering device inputs the fourth feature information outputted by the third convolution layer into the fourth convolution layer. The third group sub-convolution layer in the fourth convolution layer divides the fourth feature information having the number of channels being K2 into a plurality of groups, performs a p×1 convolution operation on each group of feature information, and then merges the number of channels, to obtain feature information 4 outputted by the third group sub-convolution layer. It is assumed that the number of channels of the feature information 4 is K2, and then the feature information 4 with the number of channels being K2 is inputted into the fourth group sub-convolution layer. The fourth group sub-convolution layer divides the feature information 4 with the number of channels being K2 into a plurality of groups, performs a 1×q convolution operation on each group of feature information, and then merges the number of channels, to obtain feature information 5 outputted by the fourth group sub-convolution layer. Feature information outputted by the third convolution unit is obtained based on the feature information 5. In addition, the feature information outputted by the third convolution unit and input feature information, for example, an (i-1)^{th} piece of feature information, of the i^{th} RB are added to obtain output feature information of the i^{th} RB.

It can be learned from the foregoing description that the RB provided in this embodiment of this application includes the first convolution unit, the second convolution unit, and the third convolution unit. The first convolution unit, the second convolution unit, and the third convolution unit each include at least one convolution layer. At least one of the plurality of convolution layers included in the RB includes a GC layer formed in a GC mode, and/or at least one convolution layer includes at least two group sub-convolution layers obtained by performing, in the tensor decomposition mode and the GC mode, decomposition and channel grouping on the convolution layer having the convolution kernel size of m×n.

That is, in the MLRF mode and the GC mode, the standard convolution layer in the existing RB is decomposed into a plurality of convolution layers with relatively low operation complexity. Alternatively, in the MLRF mode, the GC mode, and the tensor decomposition mode, the standard convolution layer in the existing RB is decomposed into a plurality of convolution layers with relatively low operation complexity.

In an example, as shown in FIG. 19A, the i^{th} RB includes a first convolution unit, a second convolution unit, and a third convolution unit. The first convolution unit includes a GC layer (i.e., a first convolution layer) having a convolution kernel size of 3×3 and a first activation function (for example, PReLU). The second convolution unit includes a second convolution layer having a convolution kernel size of 1×1 and a second activation function (for example, PReLU). The third convolution unit includes a third convolution layer having a convolution kernel size of 1×1 and a GC layer (i.e., a fourth convolution layer) having a convolution kernel size of 3×3. The filtering device inputs an (i-1)^{th} piece of feature information into an i^{th} RB. The GC layer having the convolution kernel size of 3×3 in the first convolution unit in the i^{th} RB divides the (i-1)^{th} piece of feature information into a plurality of groups, performs a 3×3 convolution operation on each group of feature information, and then merges the number of channels, to obtain feature information outputted by the first convolution layer. Next, the feature information outputted by the first convolution layer is processed through the first activation function to obtain first feature information outputted by the first convolution unit. After the second convolution layer having the convolution kernel size of 1×1 in the second convolution unit performs a standard convolution operation on the (i-1)^{th} piece of feature information, feature information outputted by the second convolution layer is processed through the second activation function to obtain second feature information outputted by the second convolution unit. Next, the first feature information and the second feature information are concatenated to obtain third feature information, and the third feature information is inputted into the third convolution unit. The third convolution layer in the third convolution unit performs a standard convolution operation on the third feature information to obtain fourth feature information, and the fourth feature information is inputted into the fourth convolution layer. The fourth convolution layer includes a GC layer having a convolution kernel size of 3×3. The GC layer having the convolution kernel size of 3×3 divides the fourth feature information into a plurality of groups, performs a 3×3 convolution operation on each group of feature information, and then merges the number of channels, to obtain feature information outputted by the third convolution unit. The feature information outputted by the third convolution unit and the (i-1)^{th} piece of feature information are added to obtain feature information outputted by the i^{th} RB, which may be recorded as an i^{th} piece of feature information.

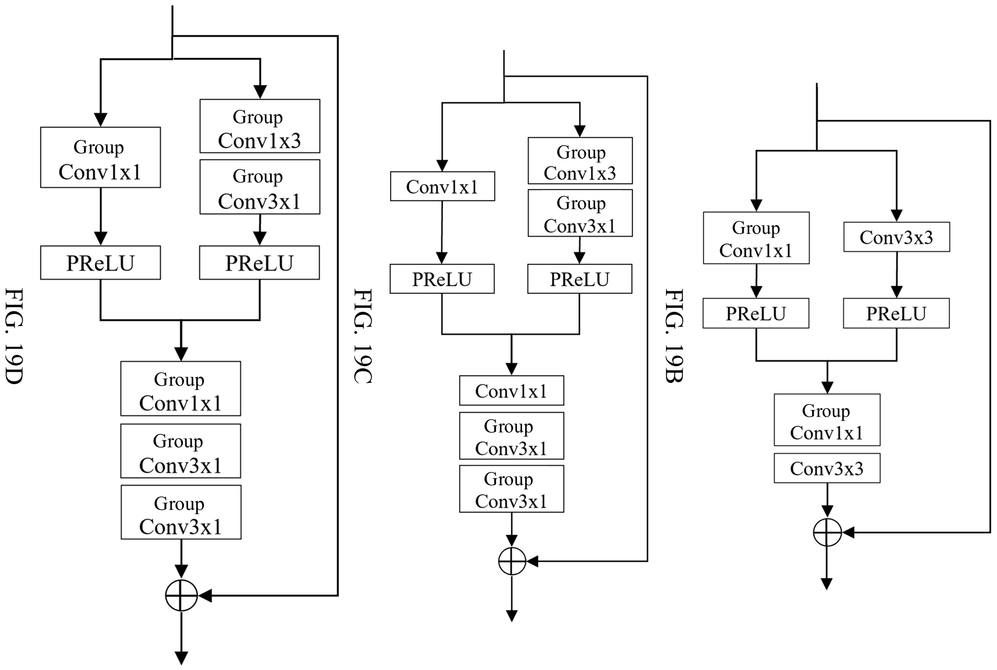

In an example, as shown in FIG. 19B, the i^{th} RB includes a first convolution unit, a second convolution unit, and a third convolution unit. The first convolution unit includes a first convolution layer having a convolution kernel size of 3×3 and a first activation function (for example, PReLU). The second convolution unit includes a GC layer (i.e., a second convolution layer) having a convolution kernel size of 1×1 and a second activation function (for example, PReLU). The third convolution unit includes a GC layer (i.e., a third convolution layer) having a convolution kernel size of 1×1 and a fourth convolution layer having a convolution kernel size of 3×3. The filtering device inputs an (i-1)^{th} piece of feature information into an i^{th} RB. After the first convolution layer having a convolution kernel size of 3×3 in the first convolution unit in the i^{th} RB performs a standard convolution operation on the (i-1)^{th} piece of feature information, feature information outputted by the first convolution layer is processed through the first activation function to obtain first feature information outputted by the first convolution unit. The GC layer having the convolution kernel size of 3×3 in the second convolution unit in the i^{th} RB divides the (i-1)^{th} piece of feature information into a plurality of groups, performs a 3×3 convolution operation on each group of feature information, and then merges the number of channels, to obtain feature information outputted by the second convolution layer. Next, the feature information outputted by the second convolution layer is processed through the second activation function to obtain second feature information outputted by the second convolution unit. Next, the first feature information and the second feature information are concatenated to obtain third feature information, and the third feature information is inputted into the third convolution unit. The third convolution layer in the third convolution unit includes a GC layer having a convolution kernel size of 1×1. The GC layer having the convolution kernel size of 1×1 divides the third feature information into a plurality of groups, performs a 3×3 convolution operation on each group of feature information, and then merges the number of channels, to obtain fourth feature information outputted by the third convolution layer. Next, the fourth feature information is inputted into the fourth convolution layer to perform a standard convolution operation, to obtain feature information outputted by the third convolution unit. Finally, the feature information outputted by the third convolution unit and the (i-1)^{th} piece of feature information are added to obtain feature information outputted by the i^{th} RB, which may be recorded as an i^{th} piece of feature information.

In an example, as shown in FIG. 19C, the i^{th} RB includes a first convolution unit, a second convolution unit, and a third convolution unit. The first convolution unit includes a first convolution layer and a first activation function (for example, PReLU). The first convolution layer includes a first group sub-convolution layer having a convolution kernel size of 1×3 and a second group sub-convolution layer having a convolution kernel size of 3×1. The second convolution unit includes a second convolution layer having a convolution kernel size of 1×1 and a second activation function (for example, PReLU). The third convolution unit includes a third convolution layer having a convolution kernel size of 1×1 and a fourth convolution layer. The fourth convolution layer includes a third group sub-convolution layer having a convolution kernel size of 1×3 and a fourth group sub-convolution layer having a convolution kernel size of 3×1. The filtering device inputs an (i-1)^{th} piece of feature information into an i^{th} RB. The first group sub-convolution layer in the first convolution unit in the i^{th} RB divides the (i-1)^{th} piece of feature information into a plurality of groups, performs a 1×3 convolution operation on each group of feature information, and then merges the number of channels, to obtain output feature information of the first group sub-convolution layer. Next, the output feature information of the first group sub-convolution layer is inputted into the second group sub-convolution layer to perform 3×1 GC, to obtain output feature information of the second group sub-convolution layer. The output feature information of the second group sub-convolution layer is processed through the first activation function to obtain first feature information outputted by the first convolution unit. Meanwhile, after the second convolution layer in the second convolution unit in the i^{th} RB performs a 1×1 convolution operation on the (i-1)^{th} piece of feature information, feature information outputted by the second convolution layer is processed through the second activation function to obtain second feature information outputted by the second convolution unit. Next, the first feature information and the second feature information are concatenated to obtain third feature information, and the third feature information is inputted into the third convolution unit. After the third convolution layer in the third convolution unit performs a 1×1 standard convolution operation on the third feature information, fourth feature information is obtained. Next, the fourth feature information is inputted into the fourth convolution layer. The fourth convolution layer includes the third group sub-convolution layer having the convolution kernel size of 1×3 and the fourth group sub-convolution layer having the convolution kernel size of 3×1. The third group sub-convolution layer divides the fourth feature information into a plurality of groups, performs a 1×3 convolution operation on each group of feature information, and then merges the number of channels, to obtain output feature information of the third group sub-convolution layer. Next, the output feature information of the third group sub-convolution layer is inputted into the fourth group sub-convolution layer to perform 3×1 GC, to obtain output feature information of the fourth group sub-convolution layer. Finally, the feature information outputted by the third convolution unit and the (i-1)^{th} piece of feature information are added to obtain feature information outputted by the i^{th} RB, which may be recorded as an i^{th} piece of feature information.

In an example, as shown in FIG. 19D, the i^{th} RB includes a first convolution unit, a second convolution unit, and a third convolution unit. The first convolution unit includes a first convolution layer and a first activation function (for example, PReLU). The first convolution layer includes a first group sub-convolution layer having a convolution kernel size of 1×3 and a second group sub-convolution layer having a convolution kernel size of 3×1. The second convolution unit includes a GC layer having a convolution kernel size of 1×1 and a second activation function (for example, PReLU). The third convolution unit includes a GC layer having a convolution kernel size of 1×1 and a fourth convolution layer. The fourth convolution layer includes a third group sub-convolution layer having a convolution kernel size of 1×3 and a fourth group sub-convolution layer having a convolution kernel size of 3×1. The filtering device inputs an (i-1)^{th} piece of feature information into an i^{th} RB. The first group sub-convolution layer in the first convolution unit in the i^{th} RB divides the (i-1)^{th} piece of feature information into a plurality of groups, performs a 1×3 convolution operation on each group of feature information, and then merges the number of channels, to obtain output feature information of the first group sub-convolution layer. Next, the output feature information of the first group sub-convolution layer is inputted into the second group sub-convolution layer to perform 3×1 GC, to obtain output feature information of the second group sub-convolution layer. The output feature information of the second group sub-convolution layer is processed through the first activation function to obtain first feature information outputted by the first convolution unit. Meanwhile, after the second convolution layer in the second convolution unit in the i^{th} RB performs a 1×1 GC operation on the (i-1)^{th} piece of feature information, feature information outputted by the second convolution layer is processed through the second activation function to obtain second feature information outputted by the second convolution unit. Next, the first feature information and the second feature information are concatenated to obtain third feature information, and the third feature information is inputted into the third convolution unit. After the third convolution layer in the third convolution unit performs a 1×1 GC operation on the third feature information, fourth feature information is obtained. Next, the fourth feature information is inputted into the fourth convolution layer. The fourth convolution layer includes the third group sub-convolution layer having the convolution kernel size of 1×3 and the fourth group sub-convolution layer having the convolution kernel size of 3×1. The third group sub-convolution layer divides the fourth feature information into a plurality of groups, performs a 1×3 convolution operation on each group of feature information, and then merges the number of channels, to obtain output feature information of the third group sub-convolution layer. Next, the output feature information of the third group sub-convolution layer is inputted into the fourth group sub-convolution layer to perform 3×1 GC, to obtain output feature information of the fourth group sub-convolution layer. Finally, the feature information outputted by the third convolution unit and the (i-1)^{th} piece of feature information are added to obtain feature information outputted by the i^{th} RB, which may be recorded as an i^{th} piece of feature information.

The foregoing embodiment describes a process in which in case 1, the filtering device processes the standard convolution layer based on the MLRF mode, the GC mode, and the tensor decomposition mode to obtain the i^{th} RB.

Case 2: The filtering device processes the standard convolution layer based on the GC mode and the tensor decomposition mode to obtain the i^{th} RB.

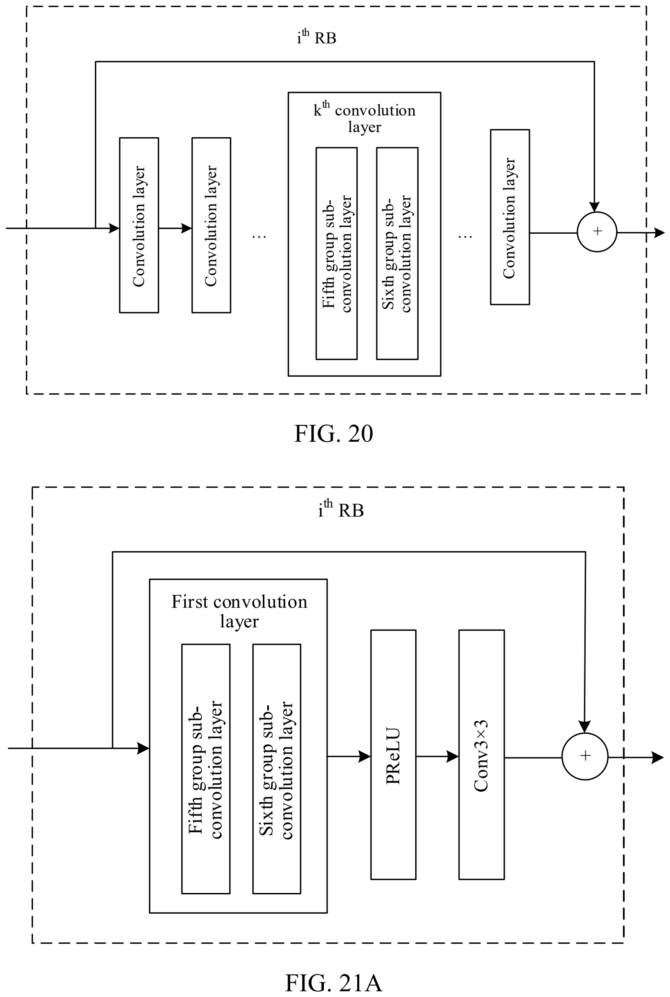

Specifically, As shown in FIG. 20, the i^{th} RB in this embodiment of this application includes N convolution layers connected in series, and a k^{th} convolution layer in the N convolution layers includes: a fifth group sub-convolution layer and a sixth group sub-convolution layer obtained by performing, in the tensor decomposition mode and the GC mode, decomposition and channel grouping on a convolution layer having a convolution kernel size of r×s, r and s being both positive integers greater than 2, N being a positive integer, and k being a positive integer less than or equal to N.

The i^{th} RB in this embodiment of this application includes N convolution layers connected in series, and part or all of the N convolution layers include at least two sub-convolution layers with relatively low operation complexity that are obtained through decomposition in the tensor decomposition mode and the GC mode. In this way, the operation complexity of the RB may be reduced without reducing the picture processing performance of the RB, thereby improving the picture filtering performance of the NNLF.

In an example, in this embodiment of this application, in the tensor decomposition mode and the GC mode, decomposition and channel grouping may be performed on the first 3×3 convolution layer in the RB shown in FIG. 7A to obtain a group sub-convolution layer having a convolution kernel size of 1×3 and a group sub-convolution layer having a convolution kernel size of 3×1.

In some embodiments, as shown in FIG. 21A, the filtering device may not process the second 3×3 convolution layer in the RB shown in FIG. 7A.

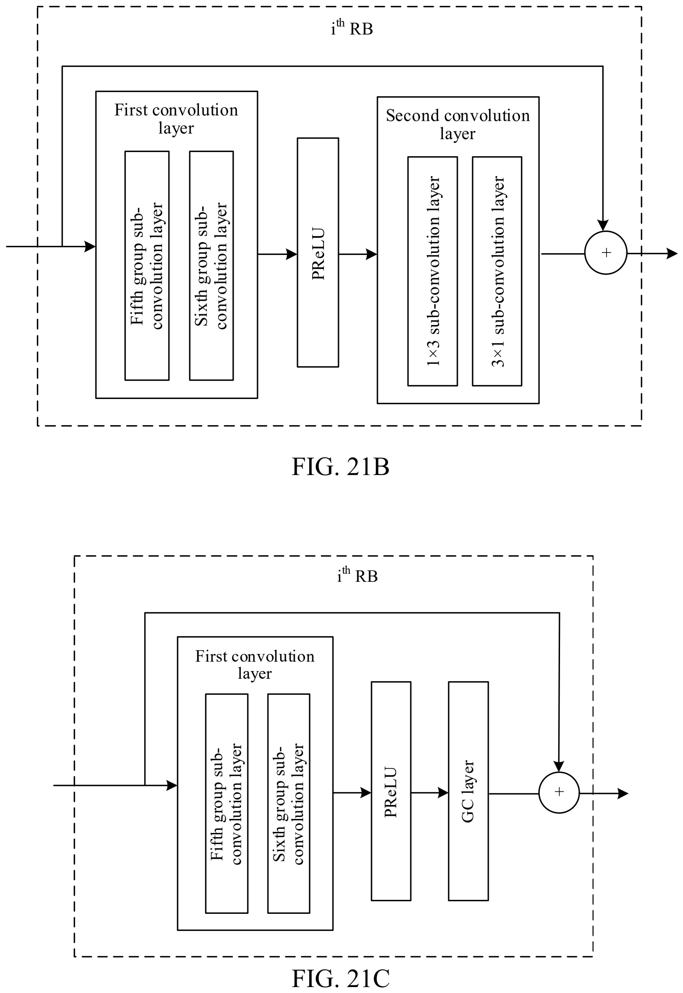

In some embodiments, as shown in FIG. 21B, the filtering device decomposes, in the tensor decomposition mode, the second 3×3 convolution layer in the RB shown in FIG. 7A into a 1×3 sub-convolution layer and a 3×1 sub-convolution layer.

In some embodiments, as shown in FIG. 21C, the filtering device processes, in the GC mode, the second 3×3 convolution layer in the RB shown in FIG. 7A as a 3×3 GC layer.

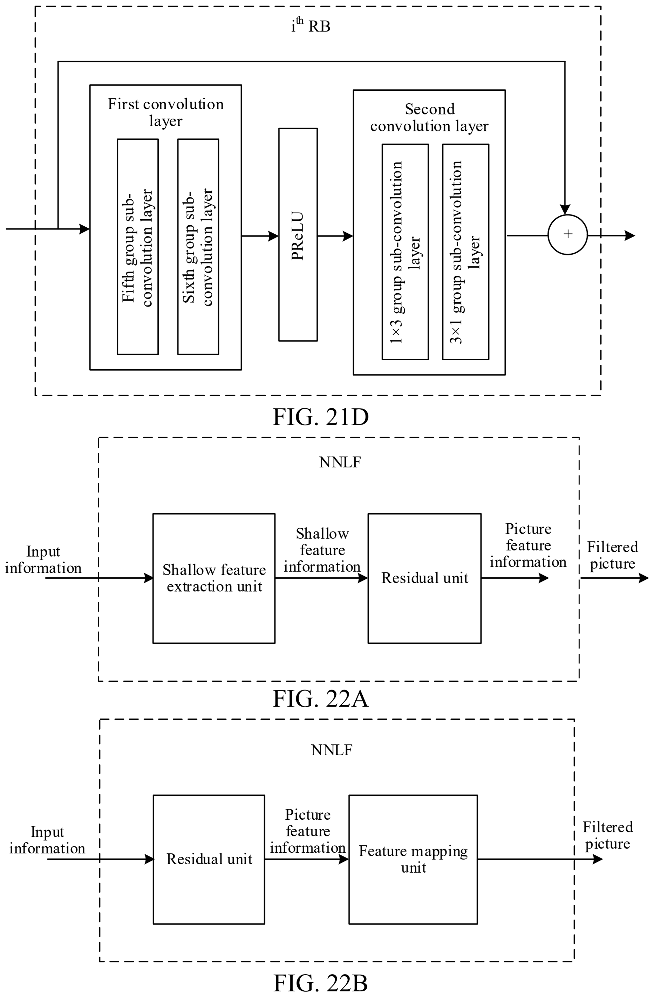

In some embodiments, as shown in FIG. 21D, the filtering device performs, in the tensor decomposition mode and the GC mode, decomposition and channel grouping on the second 3×3 convolution layer in the RB shown in FIG. 7 to obtain a group sub-convolution layer having a convolution kernel size of 1×3 and a group sub-convolution layer having a convolution kernel size of 3×1.

In an example, in this embodiment of this application, in the tensor decomposition mode and the GC mode, decomposition and channel grouping may be performed on the third 3×3 convolution layer in the RB shown in FIG. 7B to obtain a group sub-convolution layer having a convolution kernel size of 1×3 and a group sub-convolution layer having a convolution kernel size of 3×1.

In some embodiments, the filtering device may not process the first and second 1×1 convolution layers in the RB shown in FIG. 7B.

In some embodiments, the filtering device decomposes, in the GC mode, at least one of the first and second 1×1 convolution layers in the RB shown in FIG. 7B into GC layers. For example, in the GC mode, the first 1×1 convolution layer and the second 1×1 convolution layer in FIG. 7B are both processed as GC layers.

The foregoing embodiment describes a process in which in case 2, the filtering device processes the standard convolution layer based on the GC mode and the tensor decomposition mode to obtain the i^{th} RB.

In some embodiments, as shown in FIG. 22A, the NNLF in this embodiment of this application further includes a shallow feature extraction unit. The shallow feature extraction unit includes at least one convolution layer. The shallow feature extraction unit is configured to extract shallow feature information of the input information and input the shallow feature information into the residual unit.

Specifically, as shown in FIG. 22A, the NNLF in this embodiment of this application includes a shallow feature extraction unit and a residual unit. During actual filtering, a filtering device inputs input information corresponding to a to-be-filtered picture into the shallow feature extraction unit, and the shallow feature extraction unit extracts shallow feature information of the input information. Next, the shallow feature information is inputted into the residual unit, and the residual unit performs feature re-extraction on the shallow feature information to obtain picture feature information of the to-be-filtered picture.

The shallow feature extraction unit in this embodiment of this application corresponds to the head of the NNLF shown in FIG. 6.

In some embodiments, some convolution layers in the shallow feature extraction unit in this embodiment of this application are obtained by processing a standard convolution layer in at least two of an MLRF mode, a tensor decomposition mode, and a GC mode. For example, in at least two of the MLRF mode, the tensor decomposition mode, and the GC mode, the 3×3 convolution layer at the head of the NNLF shown in FIG. 6 is decomposed to obtain a plurality of sub-convolution layers with relatively low operation complexity. For example, in the tensor decomposition mode and the GC mode, the 3×3 convolution layer at the head of the NNLF shown in FIG. 6 is decomposed and grouped to obtain two group sub-convolution layers. A specific decomposition process may refer to related descriptions in the foregoing embodiment, and details are not described herein again.

In some embodiments, as shown in FIG. 22B, the NNLF in this embodiment of this application further includes a feature mapping unit. The feature mapping unit includes at least one convolution layer. The feature mapping unit is configured to map the picture feature information outputted by the residual unit to obtain the filtered picture.

Specifically, as shown in FIG. 22B, the NNLF in this embodiment of this application includes a residual unit and a feature mapping unit. During actual filtering, a filtering device inputs input information corresponding to a to-be-filtered picture into the residual unit, and the residual unit extracts feature information of the input information to obtain picture feature information of the to-be-filtered picture. Next, the picture feature information is inputted into the feature mapping unit, and the feature mapping unit maps the feature mapping unit to obtain the filtered picture of the to-be-filtered picture.

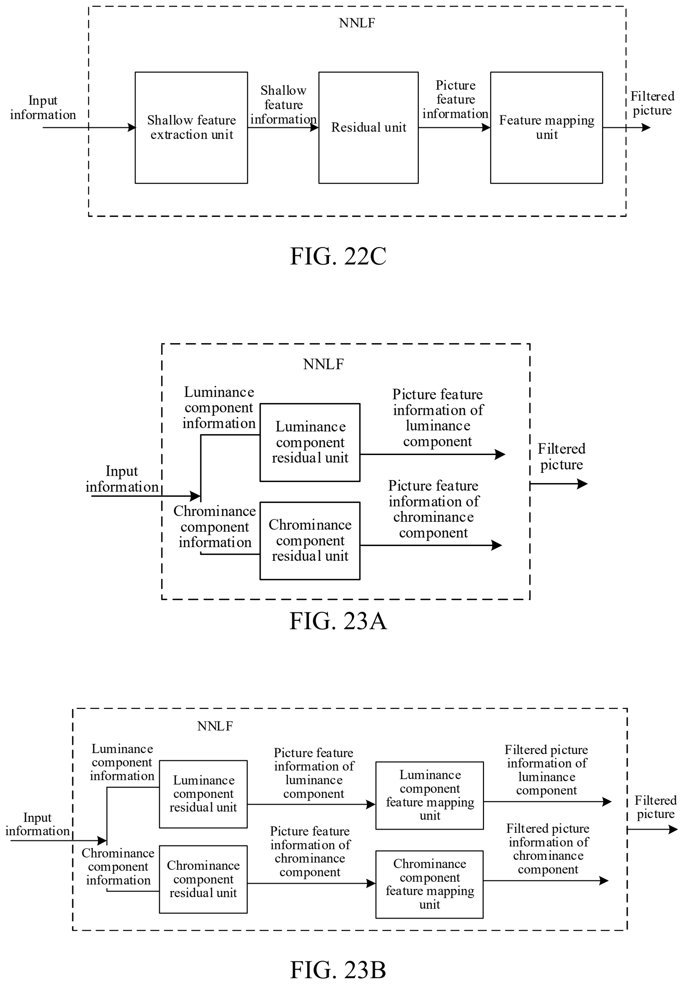

In an example, as shown in FIG. 22C, the NNLF in this embodiment of this application includes a shallow feature extraction unit, a residual unit, and a feature mapping unit. During actual filtering, a filtering device inputs input information corresponding to a to-be-filtered picture into the shallow feature extraction unit, and the shallow feature extraction unit extracts shallow feature information of the input information. Next, the filtering device inputs the shallow feature information into the residual unit, and the residual unit performs feature re-extraction on the shallow feature information to obtain picture feature information of the to-be-filtered picture. Finally, the filtering device inputs the picture feature information into the feature mapping unit for mapping, to obtain a filtered picture.

The feature mapping unit in this embodiment of this application corresponds to the tail of the NNLF shown in FIG. 6.

In some embodiments, some convolution layers in the feature mapping unit in this embodiment of this application are obtained by processing a standard convolution layer in at least two of an MLRF mode, a tensor decomposition mode, and a GC mode. For example, the filtering device decomposes, in at least two of the MLRF mode, the tensor decomposition mode, and the GC mode, the 3×3 convolution layer at the tail of the NNLF shown in FIG. 6 to obtain a plurality of sub-convolution layers with relatively low operation complexity. For example, in the tensor decomposition mode and the GC mode, the 3×3 convolution layer at the tail of the NNLF shown in FIG. 6 is decomposed and grouped to obtain two group sub-convolution layers. A specific decomposition process may refer to related descriptions in the foregoing embodiment, and details are not described herein again.

In some embodiments, the NNLF in this embodiment of this application may be a single-branch CNN and may filter a luminance component and a chrominance component of the to-be-filtered picture.

In some embodiments, the NNLF in this embodiment of this application may be a dual-branch CNN, and separates the luminance component and the chrominance component. In this case, as shown in FIG. 23A, the residual unit in this embodiment of this application includes a luminance component residual unit and a chrominance component residual unit. The luminance component residual unit is configured to perform feature extraction on a luminance component of the to-be-filtered picture to obtain picture feature information of the luminance component of the to-be-filtered picture. The chrominance component residual unit is configured to perform feature extraction on a chrominance component of the to-be-filtered picture to obtain picture feature information of the chrominance component of the to-be-filtered picture.

In some embodiments, if the NNLF includes a feature mapping unit, as shown in FIG. 23B, the feature mapping unit includes a luminance component feature mapping unit connected to the luminance component residual unit, and a chrominance component feature mapping unit connected to the chrominance component residual unit.

The luminance component feature mapping unit is configured to map picture luminance feature information outputted by the luminance component residual unit. The chrominance component feature mapping unit is configured to map picture chrominance feature information outputted by the chrominance component residual unit.

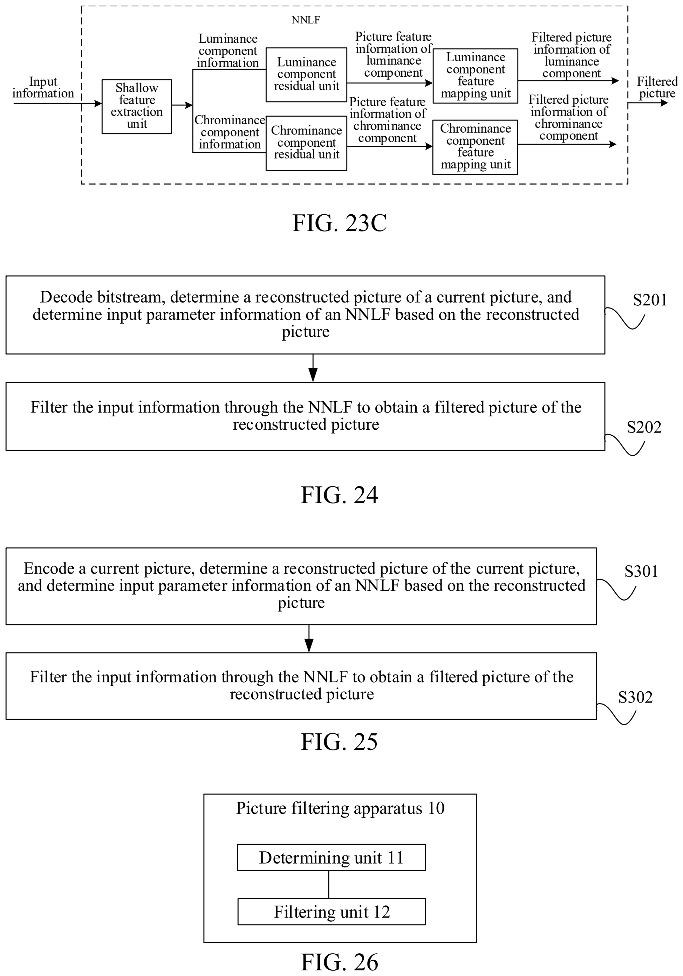

In some embodiments, as shown in FIG. 23C, the NNLF further includes a shallow feature extraction unit. As shown in FIG. 23C, during actual filtering, the filtering device inputs input information corresponding to the to-be-filtered picture to the shallow feature extraction unit, and the shallow feature extraction unit performs shallow feature information extraction on the input information to obtain shallow feature information of the input information. Next, the filtering device inputs luminance component shallow feature information in the shallow feature information into a luminance component residual unit, and the luminance component residual unit performs feature extraction on the luminance component shallow feature information to obtain picture feature information of a luminance component of the to-be-filtered picture. Then, the picture feature information of the luminance component of the to-be-filtered picture is input into a luminance component feature mapping unit for mapping, to obtain filtered picture information of the luminance component of the to-be-filtered picture. Similarly, the filtering device inputs chrominance component shallow feature information in the shallow feature information into a chrominance component residual unit, and the chrominance component residual unit performs feature extraction on the chrominance component shallow feature information to obtain picture feature information of a chrominance component of the to-be-filtered picture. Then, the filtering device inputs the picture feature information of the chrominance component of the to-be-filtered picture into a chrominance component feature mapping unit for mapping, to obtain filtered picture information of the chrominance component of the to-be-filtered picture. Finally, the filtering device adds the filtered picture information of the luminance component and the filtered picture information of the chrominance component of the to-be-filtered picture and the input information, to obtain the filtered picture of the to-be-filtered picture.

In some embodiments, if the to-be-filtered picture is a reconstructed picture, the filtering method in this embodiment of this application may be applied to video post-processing and video encoding and decoding.

For example, if the filtering method is applied to video encoding and decoding, the filtering device may directly input a filtered picture of the reconstructed picture into a display device for display, or may save the filtered picture of the reconstructed picture to a decoded picture buffer as a reference picture of another subsequent picture to predict another picture.

If the filtering method is applied to video post-processing, the filtered picture of the reconstructed picture may be directly inputted into the display device for display and not used as the reference picture of another picture.

According to the neural network-based picture filtering method provided in this embodiment of this application, a new NNLF is provided. The NNLF includes the plurality of convolution layers configured to extract the picture feature information, and the plurality of convolution layers are obtained by processing the standard convolution layer in at least two of the MLRF mode, the tensor decomposition mode, and the GC mode. For example, in the embodiments of this application, a standard convolution layer in the existing NNLF, for example, a standard convolution layer (for example, a 3×3 convolution layer) in the head, body, or tail of the NNLF shown in FIG. 6 or FIG. 8, is processed in at least two of the MLRF mode, the tensor decomposition mode, and the GC mode, and then converted into a convolution operation with low operation complexity. Thus, the filtering operation complexity of the NNLF is reduced without reducing the filtering performance of the NNLF, thereby improving the picture filtering effect.

The picture filtering method and the network structure of the NNLF proposed by the embodiments of this application are described above. The NNLF according to the foregoing embodiment may be applied to video decoding.

FIG. 24 is a schematic flowchart of a picture decoding method according to an embodiment of this application. The method according to this embodiment of this application is performed by a decoding device or a decoder. As shown in FIG. 24, the method includes the following operations.

S201: Decode a bitstream, determine a reconstructed picture of a current picture, and determine input information of an NNLF based on the reconstructed picture.

The input information includes the reconstructed picture.

The method provided in this embodiment of this application may be applied to a video decoding solution, or may be applied to video post-processing.

In some embodiments, if the method is applied to the video decoding solution, when encoding the current picture, an encoder side first divides the current picture into coding blocks and performs block-by-block encoding using the coding blocks as CUs. For example, for a to-be-encoded current block in the current picture, a prediction value of the current block is first obtained in an inter and/or intra prediction mode. Then, a residual value of the current block is obtained based on the prediction value of the current block and the current block. The encoder side transforms the residual value of the current block to obtain a transform coefficient. In one example, the encoder side does not quantize the transform coefficient of the current block and directly encodes the transform coefficient to obtain the bitstream. In another example, the encoder side quantizes the transform coefficient of the current block to obtain a quantized coefficient, and then encodes the quantized coefficient to obtain the bitstream.

In an encoding process, as shown in FIG. 2, the encoder side further performs inverse transform on the transform coefficient to obtain a residual value, and adds the residual value and the prediction value to obtain a reconstructed value of the current block. Based on the foregoing operations, reconstructed values of coding blocks in the current picture may be obtained, and these reconstructed values form the reconstructed picture of the current picture. Next, to further improve the quality of the reconstructed picture, the reconstructed picture is filtered to obtain a decoded picture of the current picture. In an example, the decoded picture may be stored in a decoded picture buffer for subsequent picture prediction.

As shown in FIG. 3, for each to-be-decoded block, for example, the current block, in the current picture, after obtaining the bitstream, a decoder side decodes the bitstream to obtain the transform coefficient of the current block. In an example, if the encoder side quantizes the transform coefficient and then encodes the transform coefficient, the decoder side decodes the bitstream to obtain a quantized coefficient of the current block, and then performs inverse quantization on the quantized coefficient to obtain a transform coefficient of the current picture. Next, the decoder side performs inverse transform on the transform coefficient of the current block to obtain a residual value of the current block. Meanwhile, the decoder side obtains a prediction value of the current block through prediction in an inter and/or intra prediction mode. In this way, the prediction value and the residual value of the current block are added to obtain a reconstructed value of the current block. Based on the foregoing operations, the decoder side may determine, through decoding, reconstructed values of to-be-decoded blocks in the current picture, and these reconstructed values form the reconstructed picture of the current picture. Next, to further improve the quality of the reconstructed picture, the decoder side filters the reconstructed picture to obtain a decoded picture of the current picture. In an example, the decoder side may store the decoded picture in a decoded picture buffer for subsequent picture prediction. In an example, the decoder side may output the decoded picture to a display device for display.

In some embodiments, the picture filtering method proposed by this embodiment of this application may be configured for filtering at least one frame of picture in a video. That is, the foregoing current picture is a picture in the video.

In some embodiments, the picture filtering method proposed by this embodiment of this application may be configured for decoding a single picture. That is, the foregoing current picture is an independent picture, for example, a picture generated by an electronic device.

In this embodiment of this application, the decoder side filters the reconstructed picture using the NNLF.

In this embodiment of this application, when the reconstructed picture is filtered, the entire reconstructed picture may be directly used as the filtering unit for filtering, or the reconstructed picture may be divided into a plurality of blocks, and each block is used as a filtering unit for filtering. For ease of description, in this embodiment of this application, a reconstructed picture is used as a filtering unit. The reconstructed picture may be a (i.e., a frame) reconstructed picture or a partial region of a reconstructed picture.

In one possible implementation, the reconstructed picture includes at least one CTU.

In another possible implementation, the reconstructed picture includes a preset picture region of a frame of reconstructed picture.

A specific manner in which the decoder side determines the input information of the NNLF based on the reconstructed picture is not limited in this embodiment of this application.

In a possible implementation, the input information only includes the reconstructed picture.

In a possible implementation, in addition to the reconstructed picture, the input information further includes at least one of a predicted picture corresponding to the reconstructed picture, a boundary strength picture, a slice type of the reconstructed picture, and QP information.

S202: Filter the input information through the NNLF to obtain a filtered picture of the reconstructed picture.

The NNLF includes a plurality of convolution layers configured to extract picture feature information, and the plurality of convolution layers are obtained by processing a standard convolution layer in at least two of an MLRF mode, a tensor decomposition mode, and a GC mode.

The specific network structure of the NNLF may refer to the description of the foregoing embodiments, and details are not described herein again.

In some embodiments, the picture filtering method in this embodiment of this application may be applied to a video decoder, for example, applied to loop filtering. A filtered reconstructed picture is stored in the decoded picture buffer for subsequent picture decoding. In this case, a filter output affects video decoding. The embodiments of this application improve the filtering quality of the reconstructed picture. In this way, the video decoding effect may be improved when subsequent decoding is performed based on a reconstructed picture with good quality.

In some embodiments, the picture filtering method in this embodiment of this application may be used in a video post-processing product. For example, the method is applied to a display terminal, that is, the filtered reconstructed picture is directly displayed without being stored in the decoded picture buffer. In this case, the filter output does not affect video decoding.

In some embodiments, the picture decoding method in this embodiment of this application may further be applied to any module using a neural network in neural network-based video coding, for example, a module such as a neural network super-resolution processor or a neural network intra prediction, and the reconstructed picture block needs to be replaced with a corresponding picture block.

In the picture filtering method provided in this embodiment of this application, the decoder side determines the reconstructed picture of the current picture by decoding the bitstream, and determines the input information of the NNLF based on the reconstructed picture. The input information includes the reconstructed picture. The input information is filtered through the NNLF to obtain the filtered picture of the reconstructed picture. The NNLF includes a plurality of convolution layers configured to extract the picture feature information, and the plurality of convolution layers are obtained by processing the standard convolution layer in at least two of the MLRF mode, the tensor decomposition mode, and the GC mode. That is, in this embodiment of this application, in at least two of the MLRF mode, the tensor decomposition mode, and the GC mode, an existing standardized convolution operation is decomposed into a convolution operation with low operation complexity. Thus, the filtering operation complexity of the NNLF is reduced without reducing the filtering performance of the NNLF, thereby improving the picture filtering effect.

The picture filtering method in this embodiment of this application is described above by taking the decoder side as an example. The picture filtering method in this embodiment of this application is described below by taking the encoder side as an example.

FIG. 25 is a schematic flowchart of a picture filtering method according to an embodiment of this application. This embodiment of this application is applied to the encoder shown in FIG. 1 or FIG. 2 or applied to another electronic device. For ease of description, an encoder is used as an example herein for description. As shown in FIG. 25, the method provided in this embodiment of this application includes the following operations.

S301: Encode a current picture, determine a reconstructed picture of the current picture, and determine input information of an NNLF based on the reconstructed picture.

The input information includes the reconstructed picture.

The method provided in this embodiment of this application may be applied to a video encoding solution, or may be applied to video post-processing.

In some embodiments, if the method is applied to the video encoding solution, when encoding the current picture, an encoder side first divides the current picture into coding blocks and performs block-by-block encoding using the coding blocks as CUs. For example, for a to-be-encoded current block in the current picture, a prediction value of the current block is first obtained in an inter and/or intra prediction mode. Then, a residual value of the current block is obtained based on the prediction value of the current block and the current block. The encoder side transforms the residual value of the current block to obtain a transform coefficient. In one example, the encoder side does not quantize the transform coefficient of the current block and directly encodes the transform coefficient to obtain the bitstream. In another example, the encoder side quantizes the transform coefficient of the current block to obtain a quantized coefficient, and then encodes the quantized coefficient to obtain the bitstream.

In an encoding process, as shown in FIG. 2, the encoder side further performs inverse transform on the transform coefficient to obtain a residual value, and adds the residual value and the prediction value to obtain a reconstructed value of the current block. Based on the foregoing operations, reconstructed values of coding blocks in the current picture may be obtained, and these reconstructed values form the reconstructed picture of the current picture. Next, to further improve the quality of the reconstructed picture, the reconstructed picture is filtered to obtain a decoded picture of the current picture. In an example, the decoded picture may be stored in a decoded picture buffer for subsequent picture prediction.

In some embodiments, the picture filtering method proposed by this embodiment of this application may be configured for filtering at least one frame of picture in a video. That is, the foregoing current picture is a picture in the video.

In some embodiments, the picture filtering method proposed by this embodiment of this application may be configured for encoding a single picture. That is, the foregoing current picture is an independent picture, for example, a picture generated by an electronic device.

In this embodiment of this application, the encoder side filters the reconstructed picture using the NNLF.

In this embodiment of this application, when filtering the reconstructed picture, the encoder side may directly use the entire reconstructed picture as the filtering unit for filtering, or divide the reconstructed picture into a plurality of blocks. Each block is used as a filtering unit for filtering. For ease of description, in this embodiment of this application, a reconstructed picture is used as a filtering unit. The reconstructed picture may be a (i.e., a frame) reconstructed picture or a partial region of a reconstructed picture.

In one possible implementation, the reconstructed picture includes at least one CTU.

In another possible implementation, the reconstructed picture includes a preset picture region of a frame of reconstructed picture.

A specific manner in which the encoder side determines the input information of the NNLF based on the reconstructed picture is not limited in this embodiment of this application.

In a possible implementation, the input information only includes the reconstructed picture.

In a possible implementation, in addition to the reconstructed picture, the input information further includes at least one of a predicted picture corresponding to the reconstructed picture, a boundary strength picture, a slice type of the reconstructed picture, and QP information.

S302: Filter the input information through the NNLF to obtain a filtered picture of the reconstructed picture.

The NNLF includes a plurality of convolution layers configured to extract picture feature information, and the plurality of convolution layers are obtained by processing a standard convolution layer in at least two of an MLRF mode, a tensor decomposition mode, and a GC mode.

The specific network structure of the NNLF may refer to the description of the foregoing embodiments, and details are not described herein again.

In some embodiments, the picture filtering method in this embodiment of this application may be applied to a video encoder, for example, applied to loop filtering. A filtered reconstructed picture is stored in the decoded picture buffer for subsequent picture encoding. In this case, a filter output affects video encoding. The embodiments of this application improve the filtering quality of the reconstructed picture. In this way, the video encoding effect may be improved when subsequent encoding is performed based on a reconstructed picture with good quality.

In some embodiments, the picture filtering method in this embodiment of this application may be used in a video post-processing product. For example, the method is applied to a display terminal, that is, the filtered reconstructed picture is directly displayed without being stored in the decoded picture buffer. In this case, the filter output does not affect video encoding.

In some embodiments, the picture encoding method in this embodiment of this application may further be applied to any module using a neural network in neural network-based video encoding, for example, a module such as a neural network super-resolution processor or a neural network intra prediction, and the reconstructed picture block needs to be replaced with a corresponding picture block.

In the picture filtering method provided in this embodiment of this application, the encoder side determines the reconstructed picture of the current picture by encoding the current picture, and determines the input information of the NNLF based on the reconstructed picture. The input information includes the reconstructed picture. The input information is filtered through the NNLF to obtain the filtered picture of the reconstructed picture. The NNLF includes a plurality of convolution layers configured to extract the picture feature information, and the plurality of convolution layers are obtained by processing the standard convolution layer in at least two of the MLRF mode, the tensor decomposition mode, and the GC mode. That is, in this embodiment of this application, in at least two of the MLRF mode, the tensor decomposition mode, and the GC mode, an existing standardized convolution operation is decomposed into a convolution operation with low operation complexity. Thus, the filtering operation complexity of the NNLF is reduced without reducing the filtering performance of the NNLF, thereby improving the picture filtering effect.

The preferred implementations of this application are described in detail above with reference to the accompanying drawings. However, this application is not limited to the specific details in the foregoing implementations, multiple simple deformations may be made to the technical solutions of this application within a range of the technical concept of this application, and these simple deformations fall within the protection scope of this application. For example, the specific technical features described in the foregoing specific implementations may be combined in any proper manner in a case without conflict. To avoid unnecessary repetitions, the various possible combinations will not be described separately herein. For another example, different implementations of this application may further be arbitrarily combined without departing from the idea of this application, and these combinations shall still be regarded as content disclosed in this application.

In the method embodiments of this application, sequence numbers of the foregoing processes do not indicate execution orders. The execution orders of the processes shall be determined according to functions and internal logic of the processes and shall not be construed as any limitation to the implementation processes of the embodiments of this application.

The method embodiments of this application are described in detail above with reference to FIG. 9 to FIG. 25, and apparatus embodiments of this application are described in detail below with reference to FIG. 26 to FIG. 28.

FIG. 26 is a schematic block diagram of a neural network-based picture filtering apparatus according to an embodiment of this application and is applied to the picture filtering apparatus. The picture filtering apparatus is a filtering device or a part of the filtering device.

As shown in FIG. 26, the picture filtering apparatus 10 may include:
a determining unit 11 configured to determine input information of an NNLF based on a to-be-filtered picture, the input information including the to-be-filtered picture; and
a filtering unit 12 configured to filter the input information through the NNLF to obtain a filtered picture of the to-be-filtered picture, wherein the NNLF includes a plurality of convolution layers configured to extract picture feature information; and the plurality of convolution layers are obtained by processing a standard convolution layer in at least two of an MLRF mode, a tensor decomposition mode, and a GC mode.

In some embodiments, the NNLF includes a residual unit, the residual unit includes a plurality of RBs sequentially connected, an i^{th} RB in the plurality of RBs includes all or part of the plurality of convolution layers, and i is a positive integer.

In some embodiments, the i^{th} RB includes a first convolution unit, a second convolution unit, and a third convolution unit, and the first convolution unit and the second convolution unit are connected in parallel and then connected in series to the third convolution unit. The first convolution unit includes a first convolution layer, the second convolution unit includes a second convolution layer, and the third convolution unit includes a third convolution layer. Convolution kernel sizes of the first convolution layer and the second convolution layer are different, and at least one of the first convolution layer, the second convolution layer, and the third convolution layer includes a GC layer. The GC layer is configured to divide, in the GC mode, input feature information of the GC layer into a plurality of groups based on the number of channels, perform a convolution operation on each group of feature information, and then merge the number of channels as output information of the GC layer.

In some embodiments, for a j^{th} convolution layer in the first convolution layer, the second convolution layer, and the third convolution layer, the j^{th} convolution layer includes: a first group sub-convolution layer and a second group sub-convolution layer obtained by performing, in the tensor decomposition mode and the GC mode, decomposition and channel grouping on a convolution layer having a convolution kernel size of m×n, m and n being both positive integers greater than 2, and j being a positive integer.

In some embodiments, a convolution kernel size of the first group sub-convolution layer is 1×n, and a convolution kernel size of the second group sub-convolution layer is m×1.

In some embodiments, the third convolution unit further includes a fourth convolution layer, and the fourth convolution layer is connected in series to the third convolution layer.

In some embodiments, the fourth convolution layer includes the GC layer; or the fourth convolution layer includes: a third sub-convolution layer and a fourth sub-convolution layer obtained by decomposing, in the tensor decomposition mode, a convolution layer having a convolution kernel size of p×q, p and q being both positive integers greater than 2; or the fourth convolution layer includes: a third group sub-convolution layer and a fourth group sub-convolution layer obtained by performing, in the tensor decomposition mode and the GC mode, decomposition and channel grouping on the convolution layer having the convolution kernel size of p×q.

In some embodiments, the i^{th} RB includes N convolution layers connected in series, and a k^{th} convolution layer in the N convolution layers includes: a fifth group sub-convolution layer and a sixth group sub-convolution layer obtained by performing, in the tensor decomposition mode and the GC mode, decomposition and channel grouping on a convolution layer having a convolution kernel size of r×s, r and s being both positive integers greater than 2, N being a positive integer, and k being a positive integer less than or equal to N.

In some embodiments, the NNLF further includes: a shallow feature extraction unit, where the shallow feature extraction unit includes at least one convolution layer; and the shallow feature extraction unit is configured to extract shallow feature information of the input information and input the shallow feature information into the residual unit.

In some embodiments, the NNLF further includes: a feature mapping unit, where the feature mapping unit includes at least one convolution layer; and the feature mapping unit is configured to map the picture feature information outputted by the residual unit to obtain the filtered picture.

In some embodiments, the residual unit includes a luminance component residual unit and a chrominance component residual unit. The luminance component residual unit is configured to perform feature extraction on a luminance component of the to-be-filtered picture to obtain picture feature information of the luminance component of the to-be-filtered picture. The chrominance component residual unit is configured to perform feature extraction on a chrominance component of the to-be-filtered picture to obtain picture feature information of the chrominance component of the to-be-filtered picture.

In some embodiments, the NNLF further includes a luminance component feature mapping unit connected to the luminance component residual unit, and a chrominance component feature mapping unit connected to the chrominance component residual unit. The luminance component feature mapping unit is configured to map picture luminance feature information outputted by the luminance component residual unit. The chrominance component feature mapping unit is configured to map picture chrominance feature information outputted by the chrominance component residual unit.

In some embodiments, the to-be-filtered picture is a reconstructed picture. The filtering unit 12 is further configured to input the filtered picture of the reconstructed picture into a display device for display, and save the filtered picture of the reconstructed picture into a decoded picture buffer as a reference picture of another picture; or input the filtered picture of the reconstructed picture into the display device for presentation, and not use the filtered picture as the reference picture.

The apparatus embodiments and the method embodiments may correspond to each other, and similar descriptions may refer to the method embodiments. To avoid duplication, details are not described herein again. Specifically, the apparatus shown in FIG. 26 may perform the foregoing embodiment of the filtering method, and the foregoing and other operations and/or functions of the modules in the apparatus are separately used for implementing the method embodiment corresponding to the filtering device. For brevity, details are not described herein again.

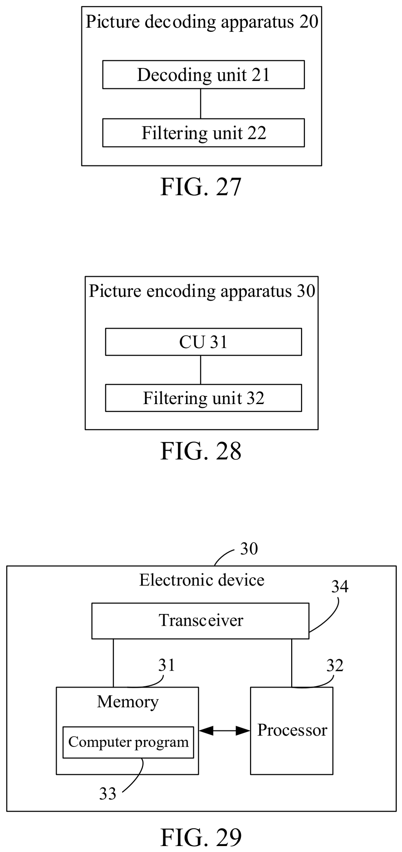

FIG. 27 is a schematic block diagram of a picture decoding apparatus according to an embodiment of this application and is applied to the picture decoding apparatus. The picture decoding apparatus is a decoding device or a part of the decoding device.

As shown in FIG. 27, the picture decoding apparatus 20 may include:
a decoding unit 21 configured to decode a bitstream, determine a reconstructed picture of a current picture, and determine input information of an NNLF based on the reconstructed picture, the input information including the reconstructed picture; and
a filtering unit 22 configured to filter the input information through the NNLF to obtain a filtered picture of the reconstructed picture, wherein the NNLF includes a plurality of convolution layers configured to extract picture feature information; and the plurality of convolution layers are obtained by processing a standard convolution layer in at least two of an MLRF mode, a tensor decomposition mode, and a GC mode.

The apparatus embodiments and the method embodiments may correspond to each other, and similar descriptions may refer to the method embodiments. To avoid duplication, details are not described herein again. Specifically, the apparatus shown in FIG. 27 may perform the foregoing embodiment of the decoding method, and the foregoing and other operations and/or functions of the modules in the apparatus are separately used for implementing the method embodiment corresponding to the decoder. For brevity, details are not described herein again.

FIG. 28 is a schematic block diagram of a picture encoding apparatus according to an embodiment of this application and is applied to the picture encoding apparatus. The picture encoding apparatus is an encoding device or a part of the encoding device.

As shown in FIG. 28, the picture encoding apparatus 30 may include:
a CU 31 configured to encode a current picture, determine a reconstructed picture of the current picture, and determine input information of an NNLF based on the reconstructed picture, the input information including the reconstructed picture; and
a filtering unit 32 configured to filter the input information through the NNLF to obtain a filtered picture of the reconstructed picture, wherein the NNLF includes a plurality of convolution layers configured to extract picture feature information; and the plurality of convolution layers are obtained by processing a standard convolution layer in at least two of an MLRF mode, a tensor decomposition mode, and a GC mode.

The apparatus embodiments and the method embodiments may correspond to each other, and similar descriptions may refer to the method embodiments. To avoid duplication, details are not described herein again. Specifically, the apparatus shown in FIG. 28 may perform the foregoing embodiment of the encoding method, and the foregoing and other operations and/or functions of the modules in the apparatus are separately used for implementing the method embodiment corresponding to the encoder. For brevity, details are not described herein again.

The apparatus in this embodiment of this application is described above with reference to the accompanying drawings from the perspective of functional modules. The functional module may be implemented in a hardware form, by instructions in a software form, or by a combination of hardware and software modules. Specifically, the operations of the method embodiments in the embodiments of this application may be accomplished by integrated logic circuits of hardware in the processor and/or instructions in a software form, and the operations of the methods disclosed in conjunction with the embodiments of this application may be performed directly by a hardware decoding processor, or by a combination of hardware and software modules in the decoding processor. In some embodiments, the software module may be stored in a random access memory (RAM), a flash memory, a read-only memory (ROM), a programmable ROM (PROM), an electrically erasable PROM (EEPROM), a register, and other mature storage media in the art. The storage medium is located in the memory. The processor reads information in the memory and completes the operations in the foregoing method embodiments in combination with hardware thereof.

FIG. 29 is a schematic block diagram of an electronic device according to an embodiment of this application. The electronic device in FIG. 29 may be the foregoing decoder, encoder, or filtering device.

As shown in FIG. 29, the electronic device 30 may include:
a memory 31 and a processor 32. The memory 31 is configured to store a computer program 33 and transmit the computer program 33 to the processor 32. In other words, the processor 32 may invoke and run the computer program 33 from the memory 31 to implement the method in this embodiment of this application.

For example, the processor 32 may be configured to perform operations in the foregoing method according to instructions in the computer program 33.

In some embodiments of this application, the processor 32 may include, but not limited to:
a general purpose processor, a digital signal processor (DSP), an application specific integrated circuit (ASIC), a field programmable gate array (FPGA) or another programmable logic device, a discrete gate or transistor logic device, or a discrete hardware component.

In some embodiments of this application, the memory 31 includes, but is not limited to:
a volatile memory and/or a non-volatile memory. The non-volatile memory may be a ROM, a PROM, an erasable PROM (EPROM), an EEPROM, or a flash memory. The volatile memory may be a RAM serving as an external cache. Through illustrative but not limited description, RAMs in many forms, for example, a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM), are available.

In some embodiments of this application, the computer program 33 may be divided into one or more modules. The one or more modules are stored in the memory 31 and executed by the processor 32 to complete the method provided in this application. The one or more modules may be a series of computer program instruction sections that can implement specific functions, and the instruction sections are configured for describing an execution process of the computer program 33 in the electronic device.

As shown in FIG. 29, the electronic device 30 may further include:
a transceiver 34. The transceiver 34 may be connected to the processor 32 or the memory 31.

The processor 32 may control the transceiver 34 to communicate with another device. Specifically, the transceiver may transmit information or data to another device, or may receive information or data transmitted by another device. The transceiver 34 may include a transmitter and a receiver. The transceiver 34 may further include an antenna, and there may be one or more antennas.

Various components of the electronic device 30 are connected through a bus system. In addition to a data bus, the bus system further includes a power bus, a control bus, and a state signal bus.

According to one aspect of this application, a computer storage medium is provided, having a computer program stored therein. The computer program, when executed by a computer, causes the computer to perform the method in the foregoing method embodiments.

The embodiments of this application further provide a computer program product containing instructions, and the instructions, when executed by a computer, cause the computer to perform the method in the foregoing method embodiments.

According to another aspect of this application, a computer program product or a computer program is provided, including computer instructions. The computer instructions are stored in a computer-readable storage medium. A processor of a computer device reads the computer instructions from the computer-readable storage medium, and the processor executes the computer instructions to cause the computer device to perform the method in the foregoing method embodiments.

In other words, when implemented using software, the entire or part of the implementation may be in the form of the computer program product. The computer program product includes one or more computer instructions. When the computer program instructions are loaded and executed on a computer, the procedures or functions of the embodiments of this application are fully or partially implemented. The computer may be a general-purpose computer, a dedicated computer, a computer network, or other programmable apparatuses. The computer instructions may be stored in the computer-readable storage medium or transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any available medium that can be accessed by a computer, or a data storage device such as a server or a data center integrated by one or more available media. The available medium may be a magnetic medium (for example, a floppy disk, a hard disk, or a magnetic tape), an optical medium (for example, a DVD), a semiconductor medium (for example, a solid state disk (SSD)), or the like.

A person skilled in the art may recognize that the exemplary modules and algorithm operations described with reference to the embodiments disclosed in this specification can be implemented by electronic hardware, or a combination of computer software and electronic hardware. Whether these functions are implemented in hardware or software depends on the specific application and design constraints of the technical solutions. For each particular application, a person skilled in the art may use different methods to achieve the described function, but this implementation shall not be considered outside the scope of this application.

The foregoing descriptions are merely specific implementations of this application, but are not intended to limit the protection scope of this application. Any variation or replacement readily thought of by a person skilled in the art within the technical scope disclosed in this application shall fall within the protection scope of this application. Therefore, the protection scope of this application shall be subject to the protection scope of the claims.

## Claims

1. A neural network-based picture filtering method performed by a filtering device, the method comprising:
determining input information of a neural network loop filter (NNLF) based on a to-be-filtered picture, the input information including the to-be-filtered picture; and
filtering the input information through the NNLF to obtain a filtered picture of the to-be-filtered picture, wherein the NNLF includes a plurality of convolution layers configured to extract picture feature information; and the plurality of convolution layers are obtained by processing a standard convolution layer in at least two of a multi-level receptive field (MLRF) mode, a tensor decomposition mode, and a group convolution (GC) mode.

2. The method according to claim 1, wherein the NNLF includes a residual unit, the residual unit includes a plurality of residual blocks (RBs) sequentially connected, an i^{th} RB in the plurality of RBs includes all or part of the plurality of convolution layers, and i is a positive integer.

3. The method according to claim 2, wherein the i^{th} RB includes a first convolution unit, a second convolution unit, and a third convolution unit, and the first convolution unit and the second convolution unit are connected in parallel and then connected in series to the third convolution unit; and
the first convolution unit includes a first convolution layer, the second convolution unit includes a second convolution layer, and the third convolution unit includes a third convolution layer; convolution kernel sizes of the first convolution layer and the second convolution layer are different, and at least one of the first convolution layer, the second convolution layer, and the third convolution layer includes a GC layer; the GC layer is configured to divide, in the GC mode, input feature information of the GC layer into a plurality of groups based on the number of channels, perform a convolution operation on each group of feature information, and then merge the number of channels as output information of the GC layer.

4. The method according to claim 3, wherein for a j^{th} convolution layer in the first convolution layer, the second convolution layer, and the third convolution layer, the j^{th} convolution layer includes: a first group sub-convolution layer and a second group sub-convolution layer obtained by performing, in the tensor decomposition mode and the GC mode, decomposition and channel grouping on a convolution layer having a convolution kernel size of m×n, m and n being both positive integers greater than 2, and j being a positive integer.

5. The method according to claim 4, wherein a convolution kernel size of the first group sub-convolution layer is 1×n, and a convolution kernel size of the second group sub-convolution layer is m×1.

6. The method according to any one of claims 3 to 5, wherein the third convolution unit further includes a fourth convolution layer, and the fourth convolution layer is connected in series to the third convolution layer.

7. The method according to claim 6, wherein the fourth convolution layer includes the GC layer; or
the fourth convolution layer includes: a third sub-convolution layer and a fourth sub-convolution layer obtained by decomposing, in the tensor decomposition mode, a convolution layer having a convolution kernel size of p×q, p and q being both positive integers greater than 2; or
the fourth convolution layer includes: a third group sub-convolution layer and a fourth group sub-convolution layer obtained by performing, in the tensor decomposition mode and the GC mode, decomposition and channel grouping on the convolution layer having the convolution kernel size of p×q.

8. The method according to claim 2, wherein the i^{th} RB includes N convolution layers connected in series, and a k^{th} convolution layer in the N convolution layers includes: a fifth group sub-convolution layer and a sixth group sub-convolution layer obtained by performing, in the tensor decomposition mode and the GC mode, decomposition and channel grouping on a convolution layer having a convolution kernel size of r×s, r and s being both positive integers greater than 2, N being a positive integer, and k being a positive integer less than or equal to N.

9. The method according to any one of claims 2 to 8, wherein the NNLF further includes: a shallow feature extraction unit, wherein the shallow feature extraction unit includes at least one convolution layer; and
the shallow feature extraction unit is configured to extract shallow feature information of the input information and input the shallow feature information into the residual unit.

10. The method according to any one of claims 2 to 8, wherein the NNLF further includes: a feature mapping unit, wherein the feature mapping unit includes at least one convolution layer; and
the feature mapping unit is configured to map the picture feature information outputted by the residual unit to obtain the filtered picture.

11. The method according to any one of claims 2 to 10, wherein the residual unit includes a luminance component residual unit and a chrominance component residual unit;
the luminance component residual unit is configured to perform feature extraction on a luminance component of the to-be-filtered picture to obtain picture feature information of the luminance component of the to-be-filtered picture; and
the chrominance component residual unit is configured to perform feature extraction on a chrominance component of the to-be-filtered picture to obtain picture feature information of the chrominance component of the to-be-filtered picture.

12. The method according to claim 11, wherein the NNLF further includes a luminance component feature mapping unit connected to the luminance component residual unit, and a chrominance component feature mapping unit connected to the chrominance component residual unit;
the luminance component feature mapping unit is configured to map picture luminance feature information outputted by the luminance component residual unit; and
the chrominance component feature mapping unit is configured to map picture chrominance feature information outputted by the chrominance component residual unit.

13. The method according to any one of claims 1 to 12, wherein the to-be-filtered picture is a reconstructed picture, and the method further comprises:
inputting the filtered picture of the reconstructed picture into a display device for display, and saving the filtered picture of the reconstructed picture into a decoded picture buffer as a reference picture of another picture; or inputting the filtered picture of the reconstructed picture into the display device for presentation, and not using the filtered picture as the reference picture.

14. A picture decoding method performed by a decoding device, the method comprising:
decoding a bitstream, determining a reconstructed picture of a current picture, and determining input information of a neural network loop filter (NNLF) based on the reconstructed picture, the input information including the reconstructed picture; and
filtering the input information through the NNLF to obtain a filtered picture of the reconstructed picture, wherein the NNLF includes a plurality of convolution layers configured to extract picture feature information, and the plurality of convolution layers are obtained by processing a standard convolution layer in at least two of a multi-level receptive field (MLRF) mode, a tensor decomposition mode, and a group convolution (GC) mode.

15. A picture encoding method performed by an encoding device, the method comprising:
encoding a current picture, determining a reconstructed picture of the current picture, and determining input information of a neural network loop filter (NNLF) based on the reconstructed picture, the input information including the reconstructed picture; and
filtering the input information through the NNLF to obtain a filtered picture of the reconstructed picture, wherein the NNLF includes a plurality of convolution layers configured to extract picture feature information; and the plurality of convolution layers are obtained by processing a standard convolution layer in at least two of a multi-level receptive field (MLRF) mode, a tensor decomposition mode, and a group convolution (GC) mode.

16. A neural network-based picture filtering apparatus, applied to a filtering device, and comprising:
a determining unit configured to determine input information of a neural network loop filter (NNLF) based on a to-be-filtered picture, the input information including the to-be-filtered picture; and
a filtering unit configured to filter the input information through the NNLF to obtain a filtered picture of the to-be-filtered picture, wherein the NNLF includes a plurality of convolution layers configured to extract picture feature information; and the plurality of convolution layers are obtained by processing a standard convolution layer in at least two of a multi-level receptive field (MLRF) mode, a tensor decomposition mode, and a group convolution (GC) mode.

17. A picture decoding apparatus, applied to a decoding device, and comprising:
a decoding unit configured to decode a bitstream, determine a reconstructed picture of a current picture, and determine input information of a neural network loop filter (NNLF) based on the reconstructed picture, the input information including the reconstructed picture; and
a filtering unit configured to filter the input information through the NNLF to obtain a filtered picture of the reconstructed picture, wherein the NNLF includes a plurality of convolution layers configured to extract picture feature information; and the plurality of convolution layers are obtained by processing a standard convolution layer in at least two of a multi-level receptive field (MLRF) mode, a tensor decomposition mode, and a group convolution (GC) mode.

18. A picture encoding apparatus, applied to an encoding device, and comprising:
an encoding unit configured to encode a current picture, determine a reconstructed picture of the current picture, and determine input information of a neural network loop filter (NNLF) based on the reconstructed picture, the input information including the reconstructed picture; and
a filtering unit configured to filter the input information through the NNLF to obtain a filtered picture of the reconstructed picture, wherein the NNLF includes a plurality of convolution layers configured to extract picture feature information; and the plurality of convolution layers are obtained by processing a standard convolution layer in at least two of a multi-level receptive field (MLRF) mode, a tensor decomposition mode, and a group convolution (GC) mode.

19. An electronic device, comprising a processor and a memory,
the memory being configured to store a computer program; and
the processor being configured to execute the computer program to implement the method according to any one of claims 1 to 13, 14, and 15.

20. A computer-readable storage medium storing a computer program, wherein
the computer program, when executed by a computer, causes the computer to perform the method according to any one of claims 1 to 13, 14, and 15.

21. A computer program product, comprising computer instructions which, when executed by a processor, implement the method according to any one of claims 1 to 13, 14, and 15.
